# EUROPÄISCHE PATENTANMELDUNG

(11) **EP 2 793 126 A1**
(43) Veröffentlichungstag der Anmeldung: **22.10.2014**
(21) Anmeldenummer: 13164065.8
(22) Anmeldetag: 17.04.2013
(51) Int. Cl.: G06F 9/44, G06F 17/30

(54) **Vorrichtung, Verfahren und System für eine sprachintegrierte Datenbank**

(71) Anmelder: Hasso-Plattner-Institut für Softwaresystemtechnik GmbH, 14482 Potsdam (DE)
(72) Erfinder: Hirschfeld, Robert, Prof. Dr., 14471 Potsdam (DE); Steinert, Bastian, 13583 Berlin (DE); Berov, Leonid, 49076 Osnabrück (DE); Schreiber, Robin, 22605 Hamburg (DE); Henning, Johannes, 14471 Potsdam (DE); Mattis, Tony, 14482 Potsdam (DE); Rein, Patrick, 14482 Potsdam (DE); Seckler, Eric, 14482 Potsdam (DE); Raab, Andreas, verstorben (DE)
(74) Vertreter: Baldus, Oliver

(57) **Zusammenfassung**

Computer-basierte Vorrichtung (20) für eine sprachintegrierte Datenbank (30, 70), umfassend: eine Speichereinrichtung (214) zum Speichern eines ersten Objekts (7100) mit einem Attribut (750₂) und eines zweiten Objekts mit einem korrespondierenden Attribut (750₀, 750₁, 750₃, 750₄), die das Attribut (750₂) und das korrespondierende Attribut (750₀, 750₁, 750₃, 750₄) in einer Einheit (750) benachbart speichert, und eine Verarbeitungseinrichtung (212), die auf das Attribut (750₂) und das korrespondierende Attribut (750₀, 750₁, 750₃, 750₄) zusammen zugreifen kann, sowie ein Computer-implementiertes Verfahren, ein Computer-implementiertes System, ein Computerprogrammprodukt und einen Speicher mit einem Computerprogramm.

## Beschreibung

### GEBIET DER ERFINDUNG

Die vorliegende Erfindung liegt auf dem Gebiet der Informationstechnologie und betrifft insbesondere Vorrichtungen, Verfahren und Systeme für die Bereitstellung von Datenbankfunktionalität mittels einer sprachintegrierten Datenbank.

### STAND DER TECHNIK

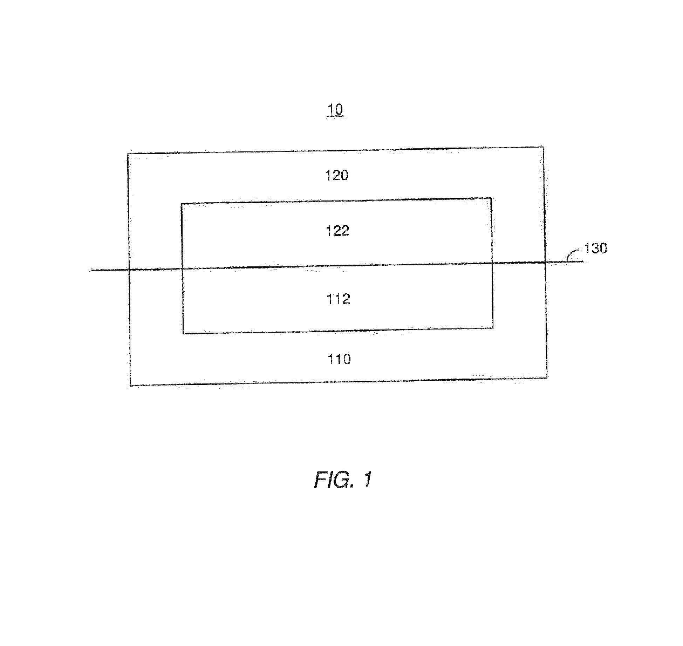

Figur 1 zeigt eine schematische Darstellung eines bekannten informationstechnologischen Systems 10. Das System 10 umfasst eine Datenbankanwendung 110 und eine Geschäftsanwendung 120, die an einer Prozessgrenze 130, beispielsweise mittels einer Datenbanksprache wie SQL (standard query language), miteinander kommunizieren. Dazu können die Datenbankanwendung 110 einen SQL-Prozessor 112 und die Geschäftsanwendung 120 einen Objekt-relationalen Abbilder (object-relational mapper, ORM) 122 umfassen.

Die Datenbankanwendung 110 kann Daten speichern, verwalten und wiedergeben. Dabei ist die Datenbankanwendung 110, unabhängig von der Bedeutung der Daten und/oder der Geschäftsanwendung 120, bezüglich dieser Funktionen optimiert.

Die Geschäftsanwendung 120 kann, zur Beherrschung der Komplexität von Geschäftsabläufen, betriebliche Prozesse teilweise oder ganz abbilden. Somit kann die Geschäftsanwendung 120 ein Unternehmen beispielsweise bei der Kundenverwaltung, Auftragsverwaltung, Finanzbuchhaltung und Personalverwaltung unterstützen. Dabei nutzt die Geschäftsanwendung 120 die Datenbankanwendung 110 zur Speicherung der Daten. Die Geschäftsanwendung 120 kann, aufgrund der Menge an zu verwaltenden Daten, als modellintensive und datenintensive Anwendung bezeichnet werden. Die Geschäftsanwendung 120 kann beispielsweise in einer Objekt-orientierter Programmiersprache entwickelt und/oder programmiert werden.

Die Trennung der Datenbankanwendung 110 und der Geschäftsanwendung 120 ist weit verbreitet, da so jeweils die zugrundeliegenden Technologien optimiert werden können. Wenn die Geschäftsanwendung 120 unabhängig von einer Datenbankanwendung ist, kann sie beispielsweise mit einer bereits in dem Unternehmen eingeführten Datenbankanwendung 110 zusammenarbeiten, oder die Datenbankanwendung 110 ist austauschbar. Die Arbeit an der Prozessgrenze (Schnittstelle) 130 kann jedoch problematisch sein. Beispielsweise kann eine Fehleranalyse und/oder Fehlerbehebung über die Prozessgrenze hinweg schwierig sein. Weiterhin kann eine Optimierung des gesamten Systems 10 schwierig sein, da beispielsweise nicht offensichtlich ist, ob sie in der Datenbankanwendung 110 oder Geschäftsanwendung 120 zu erfolgen hat. Folglich müssen Entwickler und/oder Programmierer mehrere verschiedene Technologien beherrschen, um an dem System 10 arbeiten zu können, was die Anforderungen erhöht und die Einarbeitungszeit verlängert. Weiterhin kann der Aufwand, beispielsweise in Form von Codeduplikation für die Datenbankanwendung 110 und die Geschäftsanwendung 120, erhöht sein, da beispielsweise Modelle für die Verarbeitung in der Datenbankanwendung 110 und für die Verarbeitung in der Geschäftsanwendung 120 explizit beschrieben werden müssen.

Wenn Objekte aus einer Geschäftsanwendung 120, die in einer Objekt-orientierten Programmiersprache entwickelt bzw geschrieben ist, in einer relationalen Datenbank gespeichert werden, treten Probleme auf, die als Objekt-relationale Unverträglichkeit (object-relational impedance mismatch, impedance mismatch) bezeichnet werden.

Um die Unverträglichkeit bzw. Diskrepanz zwischen dem relationalen Modell der Datenbankanwendung 110 und dem Objekt-orientierten Modell der Geschäftsanwendung 120 aufzulösen, können die Objekte der Geschäftsanwendung 120 als solche in der Datenbankanwendung 110 gespeichert werden. Dazu wird beispielsweise ein Objekt der Geschäftsanwendung 120 serialisiert und als Binärobjekt in der Datenbankanwendung 110 gespeichert. Da die Datenbankanwendung 110 die Objekte der Geschäftsanwendung 120 lediglich speichert, kann sich die Trennung nicht mehr bemerkbar machen. Folglich müssen Entwickler und/oder Programmierer der Geschäftsanwendung 120 nur deren Technologie beherrschen, um an dem System 10 arbeiten zu können. Allerdings nimmt die Belegung des Speichers durch die Datenbankanwendung 110 zu, da sich die Binärobjekte schlechter komprimieren lassen. Weiterhin nimmt die Leistungsfähigkeit (Performanz, performance) des Systems 10 ab, da auf den Binärobjekten in der Datenbankanwendung 110 keinen Abfragen ausgeführt werden können, sondern die Binärobjekte zunächst in die Geschäftsanwendung 120 zurückübertragen werden müssen.

Auch wenn die Komplexität von einzelnen Aufgaben der Geschäftsanwendung 120 oft vergleichsweise gering ist, kann die Entwicklung und Erzeugung der Geschäftsanwendung 120 auf herkömmliche Weise daher, beispielsweise aufgrund der Trennung der Datenbankanwendung 110 und der Geschäftsanwendung 120 in Schichten mit unterschiedlichen Abstraktionen und/oder in unterschiedliche Laufzeitumgebungen, sehr aufwendig sein.

GemStone von GemStone Systems (www.gemstone.com) ist ein unternehmensgehöriges Anwendungsrahmenwerk (proprietary application framework), das zuerst für die dynamische Objekt-orientierte Programmiersprache Smalltalk als Objekt-Datenbank verfügbar war.

High Performance Analytic Appliance (jetzt HANA) von SAP (www.sap.com) ist eine Datenbanktechnologie aus Hardware und Software, die gegenüber herkömmlichen Anwendungen mittels In-Memory-Technologie, bei der der gegenüber einer Festplatte erheblich schnellere Arbeitsspeicher des Computers zur Datenspeicherung genutzt wird, Auswertungen mit höherer Leistungsfähigkeit ermöglicht.

CA 2,425,033 A1 offenbart ein System und ein Verfahren für eine mehrstufige Verriegelungshierarchie in einer Datenbank mit mehrdimensionaler Zusammenlagerung (multi-dimensional clustering, MDC).

EP 2 040 180 A1 offenbart ein null-redundantes System ohne Extraktion von der relevanten Daten aus verschiedenen Quellen, Transformation der Daten in ein Schema und Format einer Zieldatenbank und Laden der Daten in die Zieldatenbank (extraction, transformation and loading, ETL) und Verfahren zum Melden von Online-Transaktionsverarbeitungs- (Echtzeit-Transaktionsverarbeitungs-, online-transaction-processing-, OLTP-) Daten.

Somit verliefen die Entwicklungen von Datenbanken und Laufzeitumgebungen für Anwendungen nahezu vollständig voneinander getrennt. Einerseits strebten die Datenbankmanagementsysteme dem relationalen Datenmodell mit einer deklarativen Anfragesprache, meist einem SQL-Dialekt, entgegen. Dies hat den Vorteil, in Anbetracht der relativ langsamen Festplattenspeicher, die Optimierung der Datenzugriffe dem Datenbankmanagementsystem selbst zu überlassen, wobei ein Entwickler bzw. Programmierer lediglich formuliert, was er haben möchte, aber nicht wie.

Andererseits sind moderne Geschäftsanwendungen in Objekt-orientierten Programmiersprachen wie Java, C++, C#, PHP und Python geschrieben. Objekte definieren sich durch ihre Identität, einen von der Identität unabhängigen Zustand und ihr Verhalten. Sie kapseln die genaue Implementierung ihres Zustands und kommunizieren über Nachrichten.

Wenn es zur Speicherung von Objekten in einer Datenbank kommt, treten eine Reihe konzeptueller Unverträglichkeiten auf, welche unter dem Begriff Objekt-relationale Unverträglichkeit gruppiert sind: Beispielsweise besitzen Tupel keine Identität; sie definieren sich allein über ihre Werte. Ebenso wenig lässt sich Kapselung, Verhalten und Nachrichtenaustausch direkt auf ein relationales Modell abbilden. Um dennoch Objekt-orientierte Schnittstellen zu Datenbanken bereitzustellen, kann ein Objekt-relationaler Abbilder verwendet werden, der als Zwischenschicht Objekt-orientierte Konzepte in einer relationalen Datenbank simuliert. Durch weitgehend transparente Übersetzung dämpft er die Effekte der Unverträglichkeit auf den Entwickler bzw. Programmierer. Dennoch erfordert er in der Regel eine Konfiguration in Form eines Schemas und einen auf die Datenbank abgestimmten Konnektor sowie Wissen über seine Implementierung, beispielsweise über die Reihenfolge, in der Objekte eines Objektbaums abgelegt werden müssen. Somit erzeugt er mehr Raum für Fehler und verursacht Einbußen in der Performanz.

Mit der Entwicklung von hauptspeicherresidenten Datenbanken ist es technisch und wirtschaftlich möglich, eine Unternehmensdatenbank vollständig im Arbeitsspeicher aufzubewahren. Dabei befinden sich die Daten und das darauf arbeitende Anwendungsprogramm im selben System, jedoch besteht die historisch-bedingte Trennung weiter. Dabei werden bereits im Arbeitsspeicher vorhandene Daten durch den Objekt-relationaler Abbilder kopiert und/oder durch Sprachen manipuliert, die von der Anwendungssprache verschieden sind.

Daher ist es wünschenswert, die effiziente Speicherung und hohe Leistungsfähigkeit mit der Verarbeitung von Objekten in einer Datenbank zu kombinieren.

### AUFAGBE DER ERFINDUNG

Die vorliegende Erfindung hat sich deshalb zur Aufgabe gestellt, eine verbesserte Datenbankfunktionalität bereitzustellen.

### BESCHREIBUNG DER ERFINDUNG

Diese Aufgabe wird durch die beiliegenden nebengeordneten Ansprüche gelöst, insbesondere durch eine Computer-basierte Vorrichtung, ein Computer-implementiertes Verfahren, ein Computer-implementiertes System, ein Computerprogrammprodukt und einen Speicher mit einem Computerprogramm.

Ein Aspekt der Erfindung betrifft eine Computer-basierte Vorrichtung für eine sprachintegrierte Datenbank, umfassend eine Speichereinrichtung zum Speichern eines ersten Objekts mit einem Attribut und eines zweiten Objekts mit einem korrespondierenden Attribut, die das Attribut und das korrespondierende Attribut in einer Einheit benachbart speichert, und eine Verarbeitungseinrichtung, die auf das Attribut und das korrespondierende Attribut zusammen zugreifen kann.

Dieser und ggf. andere Aspekte der Erfindung betreffen die Programmierung einer Datenbank und insbesondere die Umsetzung (Implementierung) der Datenbank in Software unter Berücksichtigung der Hardware, auf der die Software ausgeführt wird.

Durch diesen und ggf. andere Aspekte der Erfindung können beispielsweise ein Objekt-orientiertes Programm wie eine Laufzeitumgebung einer dynamischen Objekt-orientierten Programmiersprache und eine Datenbank vereint werden. Durch diesen und ggf. andere Aspekte der Erfindung kann ein Attribut eines Objekts benachbart zu einem korrespondierenden Attribut eines anderen Objekts in einem Speicher gespeichert werden, sodass auf die Attribute zusammen zugegriffen werden kann, wodurch der Zugriff vereinfacht und die Zugriffszeit verkürzt wird. Dabei kann jedes Attribut einer Klasse in einer eigenen Spalte bzw. Spalten-orientierten Tabelle, d. h. in aufeinander folgenden Stellen des Speichers, abgelegt werden. Dabei kann eine Methode eines der Objekte zum Lesen und/oder Schreiben auf ein Attribut zugreifen. Weiterhin kann eine Methode für das Zugreifen, beispielsweise mittels eines Klassen-Dekorators, modifiziert werden, sodass ihr Zugriff beim Lesen und/oder Schreiben entsprechend umgeleitet wird. Somit wird zum einen eine Objekt-basierte oder Objekt-orientierte Programmierung ermöglicht und zum anderen durch Berücksichtigung der Infrastruktur die Leistungsfähigkeit verbessert. Durch die Organisation der Speicherstruktur auf die Weise einer Datenbank wie der Spalten-orientierten Hauptspeicherdatenbank und eine darauf aufbauende nahtlose Integration von Transaktionen und Abfragen in dieselbe Laufzeitumgebung können transaktionale und analytische Anfragen in derselben Objekt-orientierten Hochsprache implementiert werden. Somit kann die Trennung einer Datenbankanwendung und einer Geschäftsanwendung in unterschiedliche Laufzeitumgebungen aufgehoben werden. Dadurch kann die Entwicklung und Erzeugung der Geschäftsanwendung effizienter werden.

Ein weiterer Aspekt der Erfindung betrifft eine Computer-basierte Vorrichtung, wobei die Einheit als Tabelle, beispielsweise Zeilen-orientierte Tabelle oder Spalten-orientierte Tabelle wie einspaltige Tabelle, ausgebildet ist. Durch diesen Aspekt der Erfindung können die Attribute kompakt dargestellt, gespeichert und verarbeitet werden.

Ein weiterer Aspekt der Erfindung betrifft eine Computer-basierte Vorrichtung, wobei die Speichereinrichtung als Hauptspeicher ausgebildet. Durch diesen Aspekt der Erfindung können die Attribute besonders schnell verarbeitet werden.

Ein weiterer Aspekt der Erfindung betrifft eine Computer-basierte Vorrichtung, wobei die Speichereinrichtung als flüchtiger Speicher, beispielsweise Schreib-Lese-Speicher, oder nicht-flüchtiger Speicher, beispielsweise Flash-Speicher, ausgebildet ist. Durch den flüchtigen Speicher können die Attribute besonders schnell verarbeitet werden. Durch den nicht-flüchtigen Speicher können die Attribute, beispielsweise bei Stromausfall, besonders sicher gespeichert werden.

Ein weiterer Aspekt der Erfindung betrifft eine Computer-basierte Vorrichtung, wobei das erste Objekt eine erste Instanz einer Klasse ist, und das zweite Objekt eine zweite Instanz der Klasse ist. Durch diesen Aspekt der Erfindung können gleichartige bzw. zusammengehörige Objekte einheitlich dargestellt, gespeichert und verarbeitet werden.

Ein weiterer Aspekt der Erfindung betrifft eine Computer-basierte Vorrichtung, wobei eine Methode der Klasse, beispielsweise mittels eines Klassen-Dekorators, so angepasst ist, dass sie auf das Attribut und/oder das korrespondierende Attribut, beispielsweise zum Lesen und/oder Schreiben des Attributs und/oder des korrespondierenden Attributs, in der Einheit zugreifen kann. Durch diesen Aspekt der Erfindung können gleichartige bzw. zusammengehörige Objekte einheitlich und schnell ausgewertet werden.

Ein weiterer Aspekt der Erfindung betrifft eine Computer-basierte Vorrichtung, weiterhin umfassend eine Laufzeiteinrichtung zum Bereitstellen einer Laufzeitumgebung. Durch diesen Aspekt der Erfindung kann die Leistungsfähigkeit der Datenbank und der Anwendung verbessert werden.

Ein anderer Aspekt der Erfindung betrifft ein Computer-implementiertes Verfahren für eine sprachintegrierte Datenbank, umfassend Speichern eines ersten Objekts mit einem Attribut und eines zweiten Objekts mit einem korrespondierenden Attribut mittels einer Speichereinrichtung, die das Attribut und das korrespondierende Attribut in einer Einheit benachbart speichert, und Zugreifen auf das Attribut und das korrespondierende Attribut zusammen mittels einer Verarbeitungseinrichtung.

Dieser und ggf. andere Aspekte der Erfindung betreffen die Programmierung einer Datenbank und insbesondere die Umsetzung (Implementierung) der Datenbank in Software unter Berücksichtigung der Hardware, auf der die Software ausgeführt wird.

Durch diesen und ggf. andere Aspekte der Erfindung können beispielsweise ein Objekt-orientiertes Programm wie eine Laufzeitumgebung einer dynamischen Objekt-orientierten Programmiersprache und eine Datenbank vereint werden. Durch diesen und ggf. andere Aspekte der Erfindung kann ein Attribut eines Objekts benachbart zu einem korrespondierenden Attribut eines anderen Objekts in einem Speicher gespeichert werden, sodass auf die Attribute zusammen zugegriffen werden kann, wodurch der Zugriff vereinfacht und die Zugriffszeit verkürzt wird. Dabei kann jedes Attribut einer Klasse in einer eigenen Spalte bzw. Spalten-orientierten Tabelle, d. h. in aufeinander folgenden Stellen des Speichers, abgelegt werden. Dabei kann eine Methode eines der Objekte zum Lesen und/oder Schreiben auf ein Attribut zugreifen. Weiterhin kann eine Methode für das Zugreifen, beispielsweise mittels eines Klassen-Dekorators, modifiziert werden, sodass ihr Zugriff beim Lesen und/oder Schreiben entsprechend umgeleitet wird. Somit wird zum einen eine Objekt-basierte oder Objekt-orientierte Programmierung ermöglicht und zum anderen durch Berücksichtigung der Infrastruktur die Leistungsfähigkeit verbessert. Durch die Organisation der Speicherstruktur auf die Weise einer Datenbank wie der Spalten-orientierten Hauptspeicherdatenbank und eine darauf aufbauende nahtlose Integration von Transaktionen und Abfragen in dieselbe Laufzeitumgebung können transaktionale und analytische Anfragen in derselben Objekt-orientierten Hochsprache implementiert werden. Somit kann die Trennung einer Datenbankanwendung und einer Geschäftsanwendung in unterschiedliche Laufzeitumgebungen aufgehoben werden. Dadurch kann die Entwicklung und Erzeugung der Geschäftsanwendung effizienter werden.

Ein weiterer Aspekt der Erfindung betrifft ein Computer-implementiertes Verfahren, weiterhin umfassend Ausbilden der Einheit als Tabelle, beispielsweise Zeilen-orientierte Tabelle oder Spalten-orientierte Tabelle wie einspaltige Tabelle. Durch diesen Aspekt der Erfindung können die Attribute kompakt dargestellt, gespeichert und verarbeitet werden.

Ein weiterer Aspekt der Erfindung betrifft ein Computer-implementiertes Verfahren, weiterhin umfassend Ausbilden der Speichereinrichtung als Hauptspeicher. Durch diesen Aspekt der Erfindung können die Attribute besonders schnell verarbeitet werden.

Ein weiterer Aspekt der Erfindung betrifft ein Computer-implementiertes Verfahren, weiterhin umfassend Ausbilden der Speichereinrichtung als flüchtigen Speicher, beispielsweise Schreib-Lese-Speicher, oder nicht-flüchtigen Speicher, beispielsweise Flash-Speicher. Durch den flüchtigen Speicher können die Attribute besonders schnell verarbeitet werden. Durch den nicht-flüchtigen Speicher können die Attribute, beispielsweise bei Stromausfall, besonders sicher gespeichert werden.

Ein weiterer Aspekt der Erfindung betrifft ein Computer-implementiertes Verfahren, wobei das erste Objekt 7100 eine erste Instanz einer Klasse ist, und das zweite Objekt eine zweite Instanz der Klasse ist. Durch diesen Aspekt der Erfindung können gleichartige bzw. zusammengehörige Objekte einheitlich dargestellt, gespeichert und verarbeitet werden.

Ein weiterer Aspekt der Erfindung betrifft ein Computer-implementiertes Verfahren, weiterhin umfassend Anpassen einer Methode der Klasse, beispielsweise mittels eines Klassen-Dekorators, so dass sie auf das Attribut und/oder das korrespondierende Attribut, beispielsweise zum Lesen und/oder Schreiben des Attributs und/oder des korrespondierenden Attributs, in der Einheit 750 zugreifen kann. Durch diesen Aspekt der Erfindung können gleichartige bzw. zusammengehörige Objekte einheitlich und schnell ausgewertet werden.

Ein weiterer Aspekt der Erfindung betrifft ein Computer-implementiertes Verfahren, weiterhin umfassend Bereitstellen einer Laufzeitumgebung mittels einer Laufzeiteinrichtung. Durch diesen Aspekt der Erfindung kann die Leistungsfähigkeit der Datenbank und der Anwendung verbessert werden.

Ein anderer Aspekt der Erfindung betrifft ein Computer-implementiertes System für eine sprachintegrierte Datenbank, umfassend eine der Computer-basierten Vorrichtungen, wobei eine transaktionale Anfrage und eine analytische Anfrage in einer Hochsprache implementiert werden können.

Dieser und ggf. andere Aspekte der Erfindung betreffen die Programmierung einer Datenbank und insbesondere die Umsetzung (Implementierung) der Datenbank in Software unter Berücksichtigung der Hardware, auf der die Software ausgeführt wird.

Durch diesen und ggf. andere Aspekte der Erfindung können beispielsweise ein Objekt-orientiertes Programm wie eine Laufzeitumgebung einer dynamischen Objekt-orientierten Programmiersprache und eine Datenbank vereint werden. Durch diesen und ggf. andere Aspekte der Erfindung kann ein Attribut eines Objekts benachbart zu einem korrespondierenden Attribut eines anderen Objekts in einem Speicher gespeichert werden, sodass auf die Attribute zusammen zugegriffen werden kann, wodurch der Zugriff vereinfacht und die Zugriffszeit verkürzt wird. Dabei kann jedes Attribut einer Klasse in einer eigenen Spalte bzw. Spalten-orientierten Tabelle, d. h. in aufeinander folgenden Stellen des Speichers, abgelegt werden. Dabei kann eine Methode eines der Objekte zum Lesen und/oder Schreiben auf ein Attribut zugreifen. Weiterhin kann eine Methode für das Zugreifen, beispielsweise mittels eines Klassen-Dekorators, modifiziert werden, sodass ihr Zugriff beim Lesen und/oder Schreiben entsprechend umgeleitet wird. Somit wird zum einen eine Objekt-basierte oder Objekt-orientierte Programmierung ermöglicht und zum anderen durch Berücksichtigung der Infrastruktur die Leistungsfähigkeit verbessert. Durch die Organisation der Speicherstruktur auf die Weise einer Datenbank wie der Spalten-orientierten Hauptspeicherdatenbank und eine darauf aufbauende nahtlose Integration von Transaktionen und Abfragen in dieselbe Laufzeitumgebung können transaktionale und analytische Anfragen in derselben Objekt-orientierten Hochsprache implementiert werden. Somit kann die Trennung einer Datenbankanwendung und einer Geschäftsanwendung in unterschiedliche Laufzeitumgebungen aufgehoben werden. Dadurch kann die Entwicklung und Erzeugung der Geschäftsanwendung effizienter werden.

Ein anderer Aspekt der Erfindung betrifft ein Computerprogrammprodukt, wobei das Computerprogrammprodukt ein Computerprogramm umfasst, das auf einem Datenträger oder in einem Speicher eines Computers gespeichert ist und das von dem Computer lesbare Befehle umfasst, die zur Ausführung eines der Verfahren bestimmt sind, wenn die Befehle auf dem Computer ausgeführt werden.

Dieser und ggf. andere Aspekte der Erfindung betreffen die Programmierung einer Datenbank und insbesondere die Umsetzung (Implementierung) der Datenbank in Software unter Berücksichtigung der Hardware, auf der die Software ausgeführt wird.

Durch diesen und ggf. andere Aspekte der Erfindung können beispielsweise ein Objekt-orientiertes Programm wie eine Laufzeitumgebung einer dynamischen Objekt-orientierten Programmiersprache und eine Datenbank vereint werden. Durch diesen und ggf. andere Aspekte der Erfindung kann ein Attribut eines Objekts benachbart zu einem korrespondierenden Attribut eines anderen Objekts in einem Speicher gespeichert werden, sodass auf die Attribute zusammen zugegriffen werden kann, wodurch der Zugriff vereinfacht und die Zugriffszeit verkürzt wird. Dabei kann jedes Attribut einer Klasse in einer eigenen Spalte bzw. Spalten-orientierten Tabelle, d. h. in aufeinander folgenden Stellen des Speichers, abgelegt werden. Dabei kann eine Methode eines der Objekte zum Lesen und/oder Schreiben auf ein Attribut zugreifen. Weiterhin kann eine Methode für das Zugreifen, beispielsweise mittels eines Klassen-Dekorators, modifiziert werden, sodass ihr Zugriff beim Lesen und/oder Schreiben entsprechend umgeleitet wird. Somit wird zum einen eine Objekt-basierte oder Objekt-orientierte Programmierung ermöglicht und zum anderen durch Berücksichtigung der Infrastruktur die Leistungsfähigkeit verbessert. Durch die Organisation der Speicherstruktur auf die Weise einer Datenbank wie der Spalten-orientierten Hauptspeicherdatenbank und eine darauf aufbauende nahtlose Integration von Transaktionen und Abfragen in dieselbe Laufzeitumgebung können transaktionale und analytische Anfragen in derselben Objekt-orientierten Hochsprache implementiert werden. Somit kann die Trennung einer Datenbankanwendung und einer Geschäftsanwendung in unterschiedliche Laufzeitumgebungen aufgehoben werden. Dadurch kann die Entwicklung und Erzeugung der Geschäftsanwendung effizienter werden.

Ein weiterer Aspekt der Erfindung betrifft ein Computerprogramm, das Computerinstruktionen umfasst. Die Computerinstruktionen sind auf einem Speicher eines Computers gespeichert und umfassen von dem Computer lesbare Befehle, die zur Ausführung des vorstehend beschriebenen Verfahrens bestimmt sind, wenn die Befehle auf dem Computer ausgeführt werden. Das Computerprogramm kann in einem Speicher oder auf einem Speichermedium gespeichert sein, oder es kann über ein entsprechendes Netzwerk von einem Server heruntergeladen werden.

Die Lösung der Aufgabe wird in Bezug auf die beanspruchte Vorrichtung beschrieben. Hierbei erwähnte Merkmale, Vorteile und/oder alternative Ausführungsformen sind ebenso auch auf die anderen beanspruchten Gegenstände zu übertragen und umgekehrt. Mit anderen Worten können auch das Verfahren, das System, das Computerprogrammprodukt und der Speicher mit den Merkmalen weitergebildet sein, die im Zusammenhang mit der Vorrichtung beschrieben und/oder beansprucht sind. Die entsprechenden funktionalen Merkmale der Vorrichtung werden dabei durch entsprechende gegenständliche Computer-implementierte Module, insbesondere Mikroprozessormodule des Systems ausgebildet. Die Vorrichtung, das Verfahren und das System können auch als eingebettete Systeme (embedded systems) integriert sein.

Es liegt ebenso im Rahmen der Erfindung, die Verfahrens-schritte nicht zwangsläufig in der vorstehend beschriebenen Reihenfolge auszuführen. In einer weiteren Ausführungsform können die Verfahrensschritte auch ineinander verschachtelt sein (interleaving).

Darüber hinaus ist es möglich, dass einzelne Abschnitte des beschriebenen Verfahrens als einzelne verkaufsfähige Einheiten und restliche Abschnitte des Verfahrens als andere verkaufsfähige Einheiten ausgebildet werden können. Damit kann das erfindungsgemäße Verfahren als verteiltes System auf unterschiedlichen Computer-basierten Instanzen (z. B. Client-Server-Instanzen) zur Ausführung kommen. So ist es beispielsweise möglich, dass ein Modul seinerseits unterschiedliche Sub-Module umfasst.

Im Folgenden werden die im Rahmen dieser Anmeldung verwendeten Begrifflichkeiten näher erläutert.

Ein Objekt-basiertes Programm (object-based program) ist ein Programm, das (Daten-)Felder zum Speichern von Daten als Eigenschaften (Kennzeichen, Informationsdetails, Attribute) und Methoden (Mitgliedsfunktion, method, member function) zum Bearbeiten dieser Daten jeweils in einem Objekt zusammenfasst bzw. kapselt, so dass Methoden anderer Objekte diese Daten nicht bearbeiten, beispielsweise verändern, können. Ein Attribut beschreibt den Zustand eines Objektes. Dabei umfasst das Attribut des Objekts eine Bedeutung (z. B. "Artikel") und eine konkreten Ausprägung der Bedeutung (z. B. "Besen"). Eine Methode beschreibt das Verhalten eines Objektes.

Ein Objekt-orientiertes Programm (object-oriented program, OOP) ist ein Programm in einer Objekt-orientierten Programmiersprache, bei dem ein Objekttyp (Klasse) als abstraktes Modell bzw. Bauplan für eine Vielzahl von ähnlichen Objekten dieser Klasse dient, die als Instanzen bezeichnet werden. Somit ist eine Instanz ein Objekt, das zur Laufzeit des Programms aus der Klasse erzeugt wird. Eine Aufzählung von Objekt-orientierten Programmiersprachen umfasst, zum Beispiel: Java, C++, C#, PHP und Python.

Eine Laufzeitumgebung (Ausführungsumgebung, Ablaufumgebung runtime environment, RTE) ist ein Programm, das gemeinsam mit einem Anwendungsprogramm, das nicht direkt mit einem Betriebssystem kommunizieren kann, ausgeführt wird und zwischen dem Anwendungsprogramm und dem Betriebssystem vermittelt, so dass das Anwendungsprogramm lauffähig wird.

Online-Transaktionsverarbeitung (Echtzeit-Transaktionsverarbeitung, online transaction processing, OLTP) bezeichnet eine direkte und prompte Verarbeitung von Transaktionen mittels einer Geschäftsanwendung und einer Datenbankanwendung.

Online-Analyseverarbeitung (online analytical processing, OLAP) bezeichnet eine Analyse von Daten mittels einer Geschäftsanwendung und einer Datenbankanwendung, zum Beispiel, mit operationalen Datenbeständen eines Unternehmens oder aus einem Datenlager (data warehouse). Dabei steht, im Gegensatz zur Online-Transaktionsverarbeitung, die Durchführung einer komplexen Analyse zur Gewinnung eines Ergebnisses zur Unterstützung einer Entscheidung wie Geschäftsentscheidung im Vordergrund.

Ein Datenbanksystem (DBS) ist ein System zur elektronischen Verwaltung von Daten, das große Datenmengen effizient, widerspruchsfrei und dauerhaft speichern sowie benötigte Teilmengen der Daten in unterschiedlichen und bedarfsgerechten Darstellungsformen für ein Anwendungsprogramm beispielsweise eine Geschäftsanwendung bereitstellen kann. Das Datenbanksystem umfasst eine Datenbank (database, DB), d. h. eine Menge von zu verwaltenden Daten, und ein Datenbankmanagementsystem (database management system, DBMS), d. h. ein Programm zur Verwaltung der Daten. Das Datenbankmanagementsystem organisiert intern eine strukturierte Speicherung der Daten und kontrolliert alle lesenden und schreibenden Zugriffe auf die Datenbank. Zur Abfrage und Verwaltung der Daten unterstützt ein Datenbanksystem eine Datenbanksprache wie SQL. Somit tauscht das Datenbanksystem die Flexibilität eines Programms, beispielsweise eines Objekt-orientierten Programms, aufgrund der Gleichförmigkeit der Daten, gegen ein starres aber effizientes Speicherkonzept.

Ein relationales Datenbanksystem ist ein Datenbanksystem, das auf dem relationalen Datenbankmodell beruht. Dabei stellen Relationen mathematische Beschreibungen von Tabellen, in denen die Daten verteilt gespeichert werden, und relationale Algebra beschreibt die Operationen auf den Relationen. Das relationale Datenbanksystem umfasst eine relationale Datenbank (relational database, RDB) und ein relationales Datenbankmanagementsystem (relational database management system, RDBMS).

Eine Objekt-relationale Unverträglichkeit (object-relational impedance mismatch, impedance mismatch) ist ein Problem, das auftritt, wenn Objekte aus einen Objekt-orientierten Programm, wie einem Anwendungsprogramm, in einer relationalen Datenbank gespeichert werden, da das Objekt-orientierten Modell und das relationale Datenbankmodell grundlegende Unterschiede, insbesondere in der Struktur, Identität, Datenkapselung und Arbeitsweise, aufweisen.

Ein Objekt-orientiertes Datenbanksystem (Objektdatenbanksystem, object-oriented database system, OODBS) ist ein Datenbanksystem, dass auf dem Objektdatenbankmodell basiert. Im Objekt-orientierten Datenbanksystem werden die Daten, im Unterschied zum relationalen Datenbanksystem, als Objekte verwaltet. Das Objekt-orientierte Datenbanksystem umfasst eine Objekt-orientierte Datenbank (OODB) und ein Objektorientiertes Datenbankmanagementsystem (OODBMS). Ein Objekt-orientiertes Datenbanksystem kann zur Lösung des Problems der Objekt-relationale Unverträglichkeit dienen.

Ein Objekt-relationale Datenbanksystem (object-relational database system, ORDBS) kann als Bindeglied zwischen relationalen Datenbankensystemen und Objekt-orientierten Datenbanksystemen bezeichnet werden. Es kann Mengen von Objekten in Beziehung zu Daten oder anderen Objekten setzen. Das Objekt-relationale Datenbanksystem umfasst eine Objekt-relationale Datenbank (ORDB) und ein Objekt-relationales Datenbankmanagementsystem (ORDBMS). Ein Objekt-relationales Datenbanksystem kann zur Lösung des Problems der Objekt-relationale Unverträglichkeit dienen.

Ein Objekt-relationaler Abbilder (object-relational mapper, ORM) ist eine Einrichtung, mit der ein Objekt-orientiertes Programm, wie ein Anwendungsprogramm, seine Objekte in einer relationalen Datenbank ablegen kann. Dem Programm erscheint die relationale Datenbank dann als Objekt-orientierte Datenbank, wodurch die Programmierung erleichtert wird. Der Objekt-relationale Abbilder kann mittels einer Sammlung selbständiger Programmkomponenten oder Programmmodule, wie einer Klassenbibliothek, implementiert werden. Somit kann ein Objekt-relationaler Abbilder zur Lösung des Problems der Objekt-relationale Unverträglichkeit dienen.

Eine Zeilen-orientierte Datenbank ist eine Datenbank, die Daten zeilenweise abspeichert. Die meisten bekannten Datenbanksysteme verwenden den zeilenorientierten Zugang. Die Zeilen-orientierte Datenbank unterstützt die Online-Transkationsverarbeitung. Zum Beispiel, eine Zeilen-orientierte Datenbank speichert eine Tabelle "Artikel" mit den Feldern "Nummer, Name, Preis" als:
1, Besen, 1499; 2, Bürste, 299; 3, Schrubber, 1699; 4, Handschaufel, 195.

Eine Spalten-orientierte Datenbank ist eine Datenbank, die Daten spaltenweise und nicht, wie herkömmlich, zeilenweise abspeichert. Somit steht der spaltenorientierte Zugang im Kontrast zu dem zeilenorientierten Zugang, den die meisten bekannten Datenbanksysteme verwenden. Die Spalten-orientierte Datenbank unterstützt die Online-Analyseverarbeitung. Zum Beispiel, eine Spalten-orientierte Datenbank speichert eine Tabelle "Artikel" mit den Feldern "Nummer, Name, Preis" als:
1, 2, 3, 4; Besen, Bürste, Schrubber Handschaufel; 1499, 299, 1699, 195.

Eine hauptspeicherresidente Datenbank (Hauptspeicherdatenbank, in-Memory database, IMDB) ist eine Datenbank, die den Arbeitsspeicher eines Computers als Datenspeicher verwendet, während eine herkömmliche Datenbank den Festplattenspeicher des Computers als Datenspeicher verwendet. Da der Arbeitsspeicher eine wesentlich höhere Zugriffsgeschwindigkeit als der Festplattenspeicher bietet und die Algorithmen für den Zugriff auf den Arbeitsspeicher einfacher sind, ist die hauptspeicherresidente Datenbank wesentlich schneller als die herkömmliche Datenbank, und die Zugriffszeiten sind besser vorhersagbar als bei einer herkömmlichen Datenbank. Allerdings sind die Kosten für den Arbeitsspeicher erheblich höher als für den Festplattenspeicher. Eine Hauptspeicherdatenbank ist im Allgemeinen empfindlich, da Ausfälle wie Strom- oder Hardwareausfälle erheblichen Datenverlust verursachen können, wenn die Daten nicht kontinuierlich auf ein persistentes Speichermedium geschrieben werden.

### Kurze Beschreibung der Figuren

In der folgenden detaillierten Figurenbeschreibung werden nicht einschränkend zu verstehende Ausführungsbeispiele mit deren Merkmalen und weiteren Vorteilen anhand der Zeichnung beschrieben. In dieser zeigen:
Figur 1 Eine schematische Darstellung eines bekannten informationstechnologischen Systems,
Figur 2 Eine schematische Darstellung eines Computer-Systems, in dem die bevorzugte Ausführungsform der Erfindung verwendet werden kann,
Figur 3 Eine schematische Darstellung eines integrierten Systems gemäß einer bevorzugten Ausführungsform der Erfindung,
Figur 4 Eine beispielhafte, vereinfachte Darstellung der Speicherorganisation eines Objekts in der Objekt-orientierten Skriptsprache Python 2.7,
Figur 5 Eine beispielhafte, vereinfachte Darstellung der Speicherorganisation einer Liste von Objekten in der Objekt-orientierten Skriptsprache Python 2.7,
Figur 6 Eine beispielhafte Modelldatenbank 60 für ein sprachintegriertes Datenbanksystem gemäß einer bevorzugten Ausführungsform der Erfindung,
Figur 7 Eine beispielhafte Datenbank-Klasse für ein sprachintegriertes Datenbanksystem 70 gemäß einer bevorzugten Ausführungsform der Erfindung,
Figur 8 Eine beispielshafte Darstellung der Eins-zu-Eins-Assoziation 80 für ein sprachintegriertes Datenbanksystem gemäß einer bevorzugten Ausführungsform der Erfindung,
Figur 9 Eine beispielshafte Darstellung der Eins-zu-Viele-Assoziation 90 für ein sprachintegriertes Datenbanksystem gemäß einer bevorzugten Ausführungsform der Erfindung,
Figur 10 Eine beispielshafte Darstellung der Viele-zu-Viele-Assoziation 100 für ein sprachintegriertes Datenbanksystem gemäß einer bevorzugten Ausführungsform der Erfindung,
Figur 11 Ein beispielhaftes Adressierungsschema für die Spalten eines sprachintegrierten Datenbanksystems gemäß einer bevorzugten Ausführungsform der Erfindung,
Figur 12 Einen 256-ären Trie (Präfixbaum) mit drei Ebenen und Rückreferenzen auf Elternknoten,
Figur 13 Eine Transformation eines 256-ären Tries mit einer Ebene in einen 256-ären Trie mit zwei Ebenen,
Figur 14 Ein Anlegen einer flachen Kopie eines Tries und
Figur 15 Ein Verändern eines Blattknotens des in Figur 14 gezeigten Tries.

### Detaillierte Beschreibung der Ausführungsformen

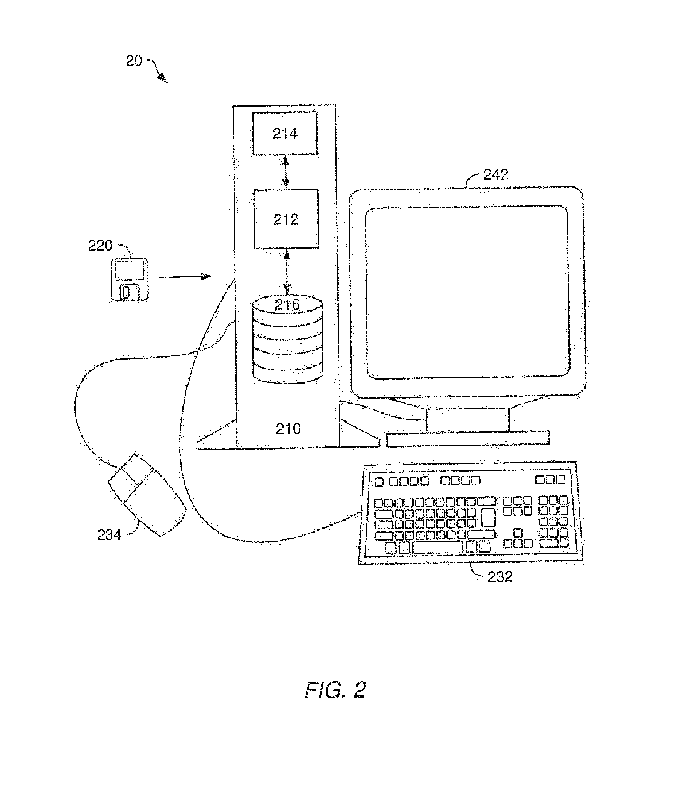

Figur 2 zeigt eine schematische Darstellung eines Computer-Systems 20, in dem die bevorzugte Ausführungsform der Erfindung verwendet werden kann.

Das Computer-System 20 umfasst eine Recheneinrichtung 210 umfassend einen Prozessor (processor) 212 zum Ausführen von Instruktionen und/oder Verarbeiten von Daten und einen Arbeitsspeicher (Hauptspeicher, main memory) 214 zum Speichern der Instruktionen und/oder Daten. Somit kann die bevorzugte Ausführungsform der Erfindung in dem Computer-System 20 verwendet bzw. ausgeführt werden.

Der Prozessor 212 kann beispielsweise als Einkernprozessor oder Mehrkernprozessor wie Zweikernprozessor oder Vierkernprozessor ausgebildet sein. Der Arbeitsspeicher 214 kann beispielsweise als flüchtiger Speicher wie Schreib-Lese-Speicher (random-access memory, RAM) und/oder nichtflüchtiger Speicher wie Nur-Lese-Speicher (read-only memory, ROM) programmierbarer Nur-Lese-Speicher (programmable ROM, PROM) oder Flash-Speicher (flash memory) ausgebildet sein. Die Recheneinrichtung 210 kann weiterhin einen Plattenspeicher (disk memory) 216 wie Festplattenspeicher (hard disk memory) zum permanenten Speichern der Daten umfassen. Die Recheneinrichtung 210 kann weiterhin ein Laufwerk wie Diskettenlaufwerk zur Aufnahme eines wechselbaren Speichermediums wie einer Diskette 220 umfassen. Die Recheneinrichtung 210 kann weiterhin ein Lesegerät zur Aufnahme eines wechselbaren Speichermediums wie einer Speicherkarte umfassen. Die Recheneinrichtung 210 kann weiterhin eine Schnittstelle zur Kommunikation über ein Netzwerk beispielsweise das Internet umfassen. Das Computer-System 20 kann weiterhin eine Eingabeeinrichtung beispielsweise eine Tastatur (keyboard) 232 oder eine Zeigeeinrichtung wie eine Maus (mouse) 234 umfassen. Das Computer-System 20 kann weiterhin eine Ausgabeeinrichtung beispielsweise einen Monitor (display) 232 oder einen Drucker wie einen Tintenstrahldrucker oder Laserdrucker umfassen.

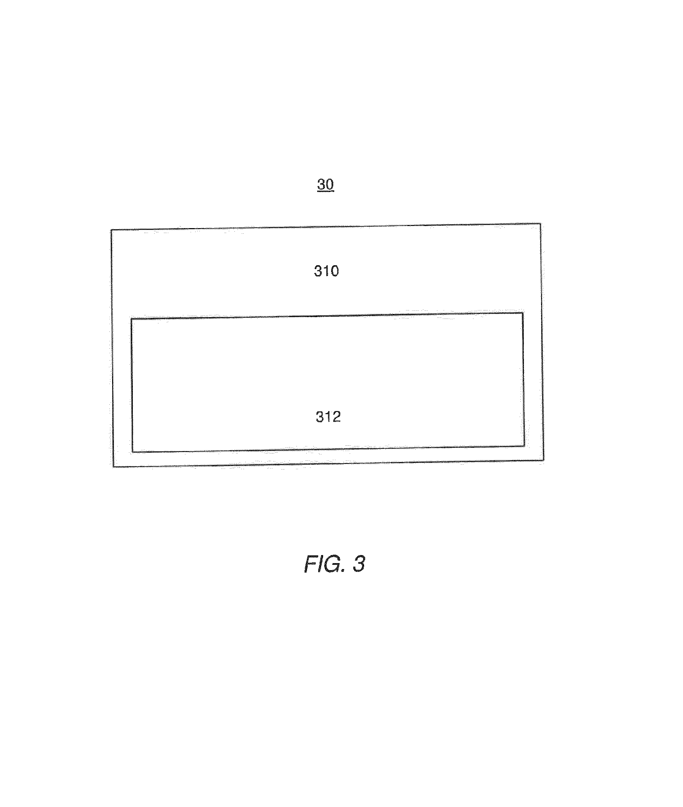

Figur 3 zeigt eine schematische Darstellung eines integrierten Systems 30 gemäß einer bevorzugten Ausführungsform der Erfindung.

Das System 30 umfasst ein Programm 310 mit einer integrierten Datenbank wie einer sprachintegrierten Datenbank 312. Das Programm 310 kann in einer Objekt-orientierten Programmiersprache vorliegen bzw. entwickelt und geschrieben sein. Die System 30 kann im Arbeitsspeicher 214 des Computer-System 20 gespeichert sein, und die Datenbank 312 kann als hauptspeicherresidente Datenbank ausgebildet sein.

Im Folgenden werden Aspekte des Systems 30 beispielhaft anhand eines Entwurfs und einer Implementierung einer Hauptspeicherdatenbank innerhalb der Objekt-orientierten Skriptsprache Python beschrieben, wobei die grundlegenden Konzepte der Hauptspeicherdatenbank in die Python-Laufzeitumgebung integriert werden. Dabei wird die Objekt-orientierte Programmierung nahtlos unterstützt und gleichzeitig auf die in Fig. 1 gezeigte Schichtenarchitektur verzichtet, sodass der Umgang mit den Daten direkter, schneller und durchweg in einer einzigen Sprache geschehen kann.

Herkömmliche Objekt-orientierte Laufzeitumgebungen für sich genommen eignen sich nicht als Datenbank. Hauptspeicherdatenbanken sind einer Ansammlung von Objekten überlegen.

Zunächst wird die Speicherorganisation von Python betrachtet und dann die Speicherorganisation einer Hauptspeicherdatenbank. Anschließend werden die Effekte der wesentlichen Unterschiede auf die Datenhaltung und Datenverarbeitung beschrieben.

Die Speicherorganisation einer Objekt-orientierten Sprache bildet zur Laufzeit einen gerichteten Graphen: Ein Objekt selbst stellt einen Knoten (node) dar und beinhaltet die primitiven Attribute seines Zustands und Zeiger (pointer) auf die Speicherstellen referenzierter Objekte. Dabei wird die Objektidentität in der Regel über die Speicherstelle des Objekts festgelegt.

Während statisch getypten Sprachen ein bloßes Hintereinanderschreiben der Attribute und Zeiger genügt und durch die Klasse fest definiert ist, welche Daten wo liegen, verwenden dynamische, insbesondere auf Duck-Typing ausgelegte Sprachen zum Teil komplexere Strukturen, um Attribute zur Laufzeit hinzuzufügen oder zu entfernen.

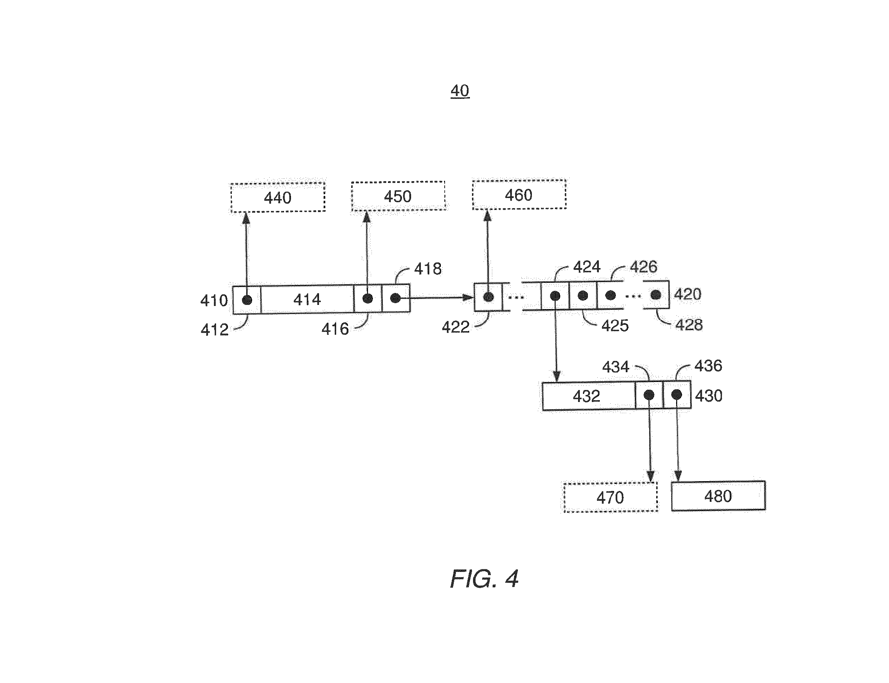

Figur 4 zeigt eine beispielhafte, vereinfachte Darstellung der Speicherorganisation 40 eines Objekts 410 in der Objekt-orientierten Skriptsprache Python 2.7. Dabei werden gestrichelte Strukturen von mehreren Objekten gemeinsam genutzt. Das Objekt (Object) 410 umfasst einen internen Typ (Internal Type) 412, der auf einen Instanzen-Typ (Type "Instance") 440 verweist, einen Integer Referenzzähler (RefCount (int)) 414, einen Laufzeittyp (Runtime Type) 416, der auf ein Klassen-Objekt (Class Object) 450, und ein Mitgliedswörterbuch (Member Dictionary) 418. Ein Wörterbuch (Dictionary) 420 umfasst einen internen Typ (Internal Type) 422, der auf einen Wörterbuch-Typ (Type "Dictionary") 460 verweist, einen Referenzzähler und Bestand (RefCount & Population) 422 und eine Liste mit Einträgen 424, 425, 426, 428. Ein Wörterbucheintrag (DictionaryEntry) 430 umfasst einen Integer Hash 432 und eine Liste mit Einträgen 434 und 436, die auf einen Objektnamen (Name(Object)) 470 bzw. einen Objektwert (Value(Object)) 480 verweisen. Das Mitgliedswörterbuch 418 verweist auf das Wörterbuch 420. Der Eintrag 424 verweist auf den Wörterbucheintrag 430. Somit werden neben dem konstanten internen Typ 412, der native C-Methoden bereitstellt, der für ein Speicherbereinigung (garbage collection) wichtige Referenzzähler 414, der Zeiger 416 auf die eigentliche Klasse 450 und ein Zeiger 418 auf das Attribut-Dictionary 420 gehalten. Dieses ist als Hashmap realisiert.

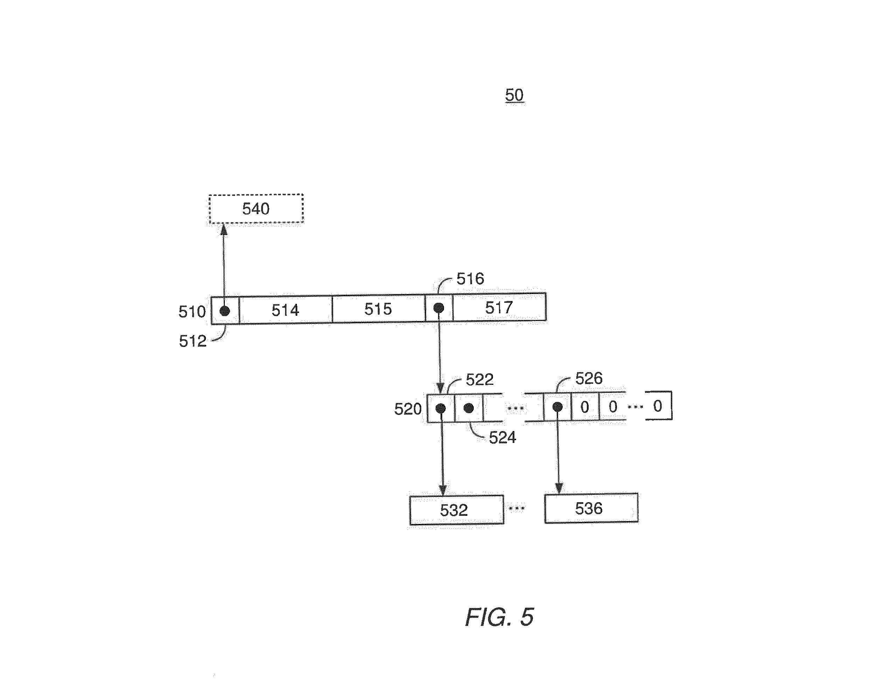

Figur 5 zeigt eine beispielhafte, vereinfachte Darstellung der Speicherorganisation 50 einer Liste von Objekten in der Objekt-orientierten Skriptsprache Python 2.7. Dabei werden gestrichelte Strukturen von mehreren Objekten gemeinsam genutzt. Eine Liste 510 umfasst einen internen Typ (Internal Type) 512, der auf einen Listen-Typ (Type "List") 540 verweist, einen Integer Referenzzähler (RefCount (int)) 514, eine Größe (Size (int)) 515, einen Elementenvektor (Elements Vector) 516 und eine Zuordnung (Allocated (int)) 517. Ein Zuordnungsfeld (Allocated Array) 520 umfasst Zeiger 522, 524 und 526. Der Elementenvektor 526 verweist auf das Zuordnungsfeld 526. Der Zeiger 522 verweist auf ein Objekt₀ 532, und der Zeiger 526 verweist auf ein Objekt_{Größe-1} 536.

Wie in Fig. 5 gezeigt arbeiten Listen 510 Index-basiert in Arrays. Neben dem eigentlichen Array 520 von Zeigern 522, 524, 526 wird die Länge 515 des allozierten Zeiger-Arrays sowie der tatsächlich verwendete Füllstand 517 gespeichert. Neben Listen bietet Python für eine flexible Verwaltung von großen Ansammlungen von Objekten als Datentypen Dictionaries und Mengen an. Dabei funktionieren Mengen ähnlich wie Dictionaries (420 in Figur 4) und legen dabei keinen Wert hinter einem Schlüssel ab.

Hauptspeicherdatenbanken unterliegen anderen Bedingungen als festplattenbasierte Speicher. Zum einen sind die Kosten pro Gigabyte erheblich höher, was zum Einsatz platzssparender Datenstrukturen motiviert, zum anderen sollen Geschwindigkeitsvorteile optimal genutzt werden. Anstatt auf möglichst sequentielle Festplattenzugriffe zu achten, sollte der Zwischenspeicher (Caches) des Prozessors optimal ausgenutzt werden. Daher nutzen Hauptspeicherdatenbanken anstelle des alten Tupel oder der Zeilen-basierten Anordnung eine Spalten-basierte Anordnung. Für die Tupel können eindeutige Kennziffern als Primärschlüssel oder Identifikation (ID) festgelegt werden, und die Beziehung von Daten untereinander kann durch Angabe der ID eines referenzierten Tupels (Fremdschlüssel) hergestellt werden.

Beispiel für Zeilen-basierte Speicherorganisation:
108 Jean Dupont 1986
109 Piet Pompies 1990
110 Jon Doe 1974

Während die Zeilen-basierte Speicherorganisation bei Festplatten für ein schnelles Auslesen zusammengehörender Daten beiträgt, bringt sie beim Hauptspeicher keinen Vorteil mehr.

Beispiel für eine Spalten-basierte Speicherorganisation:
108 Jean Dupont 1986
109 Piet Pompies 1990
110 Jon Doe 1974

Die Spalten-basierte Speicherorganisation hat die Eigenschaft, dass Daten gleichen Typs, und teilweise auch gleiche Daten, hintereinander im Speicher liegen. Somit füllen homogene bzw. ähnliche Daten zusammenhängende Speicherbereiche. Dadurch wird ein Cache-Prefetching und die Komprimierbarkeit der Daten begünstigt.

In Python ist die Speicherorganisation von Objekten auf eine maximale Flexibilität ausgelegt, d. h. zur Laufzeit können beliebig benannte Attribute angelegt, verändert, gelesen und wieder entfernt werden. Dagegen nutzen Datenbanken die Gleichförmigkeit vieler Daten durch eine starre, aber anderweitig sehr effiziente Speicherorganisation aus.

Bei Hauptspeicherdatenbanken können Werte des gleichen Attributs in einer Spalte hintereinander im Speicher angeordnet sein. Dadurch können die Attribute komprimiert werden und der vergleichsweise teure Hauptspeicher besser ausgenutzt werden als bei Zeiger-gestützten Listen von Objekten. Einen weiteren Vorteil können die Spalten bei Aggregationen über Daten haben, da die Attribute in einer Spalte nebeneinander liegen. In Python muss für das Auslesen eines einzigen Attributs mehreren Zeigern gefolgt werden. Bei Hauptspeicherdatenbanken kann das errechnen beispielsweise einer Summe über die Attribute schneller gehen. Darüber hinaus machen sich auch Hardware-Aspekte bemerkbar. Beispielsweise kann der Prozessor bei der Verarbeitung der Daten im Hintergrund bereits die nächsten Speicherstellen aus dem Hauptspeicher in seinen Cache laden (Prefetching). Somit kann die Aggregation auf dem Cache noch schneller ausgeführt werden.

Gemäß der Erfindung wird die Speicherorganisation, beispielsweise einer Hauptspeicherdatenbank, für Objekte, beispielsweise in einer Objekt-orientierten Programmiersprache wie Python, nutzbar gemacht, sodass zum einen möglichst viel Flexibilität bereit steht und zum anderen für Daten - nämlich jene, die üblicherweise in Datenbanken abgelegt werden - die Vorteile der Speicherorganisation erreicht werden. Somit können Objekte, die in der erfindungsgemäßen integrierten Datenbank residieren, von der Geschwindigkeit und kompakten Datendarstellung moderner Hauptspeicherdatenbanken profitieren.

Im Folgenden wird die Implementierung einer erfindungsgemäßen integrierten Datenbank umfassen die Speicherorganisation und weiterhin umfassend eine Kompression beschrieben.

Das Konzept der Identität ist ein grundlegender Bestandteil von Objekt-Orientierung. Während ein Objekt seinen Zustand zur Laufzeit ändern kann, ändert es seine Identität nie, d. h. das Objekt ist zu jedem Zeitpunkt eindeutig benennbar. Dabei kann die "Benennung" innerhalb eines Programms durch Referenzen erfolgen. Referenzen sind Daten, die die Identität eines Objekts, jedoch nicht seinen Zustand beschreiben und kommunizieren können. In einer Objekt-orientierten Sprache kann die Identität eines Objekts durch seine Speicheradresse gegeben sein, d. h. die Referenz beinhaltet dann lediglich die Speicheradresse in Form eines Zeigers.

In einer relationale Datenbank ist Identität durch Wertgleichheit gegeben, d. h. eine zustandsunabhängige Objekt-Identität muss simuliert werden. Dies kann durch Einführung einer relationsweit eindeutigen ID geschehen. Somit wird eine Referenz zu einer Angabe, die Tabelle und ID benennt.

Die Implementierung fügt sich nahtlos in die verwendete Objekt-orientierte Programmiersprache, Python, ein. Dabei unterscheiden sich Referenzen auf "normale" Objekte und auf Datenbank-Objekte nicht in ihrer Handhabung, selbst wenn sie unterschiedlich implementiert sind. Somit kann, beispielsweise, eine Referenz auf ein Datenbank-Objekt einer beliebigen Variablen zugewiesen werden und/oder Argument einer Funktion sein. Weiterhin können Referenzen auf Datenbank-Objekte auf ihre Identität (Referenzgleichheit) überprüft werden.

Objekte können über Nachrichten kommunizieren. Das Eintreffen einer Nachricht löst bei einem empfangenden Objekt die Ausführung einer bestimmten Methode aus. Dabei kann jedes Objekt seine eigene Methode definieren. In den gängigen Objekt-orientierten Programmiersprachen wird gleichartiges Verhalten von Objekten in Klassen zusammengefasst, sodass eine Klasse bestimmt, wie eine Nachricht durch seine Objekte zu behandeln ist. In der Implementierung verhalten sich die Datenbank-Objekte auf die gleiche Weise wie normale Laufzeit-Objekte. Dabei können Datenbank-Objekte Instanzen einer (speziellen) Datenbank-Klasse bzw. von Datenbank-Klassen sein, die, wie "normale" Klassen, d. h. Nicht-Datenbank-Klassen, Methoden besitzen kann/können. Dabei können die Instanzen der Datenbank-Klasse bzw. Datenbank-Klassen Nachrichten auf die gleiche Weise wie Instanzen "normaler" Klassen austauschen und/oder interpretieren. Die Datenbank-Klasse bzw. Datenbank-Klassen können bei der Definition speziell gekennzeichnet werden, um sie, für Entwickler bzw. Programmierer, von "normalen" Klassen unterscheidbar zu machen.

Eine Klasse kann, beispielsweise in einer statisch getypten Programmiersprache, bereits Attribute und Assoziationen definieren, d. h. den vollständigen Rahmen für den Zustand eines Objekt vorgeben. In Python kann ein Attribut zur Laufzeit in einem Konstruktor "_init_" oder einer beliebigen, anderen Methode erstellt und einem beliebigen, auch zwischenzeitlich variierenden Type oder einer beliebigen, auch zwischenzeitlich variierenden Klasse angehören. Um die Notwendigkeit neuer Spalten zu überprüfen und festzustellen, kann es erforderlich werden, jede Instanz nach ihrem Konstruktor-Aufruf oder sogar bei weiteren Methoden-Aufrufen auf (neu) angelegte Attribute zu inspizieren. Dadurch kann die Erzeugung von Instanzen stark verlangsamt werden. Daher kann eine statische Festlegung (Verankerung) von Datenbank-Attributen in der Datenbank-Klasse vorteilhaft sein. Dazu können Datenbank-Klassen Attribute, die in der Datenbank gespeichert werden sollen, explizit mit ihrem Typen definieren. Attribute, die zur Laufzeit dynamisch erzeugt werden, können sich wie Attribute von "normalen" Klassen verhalten, werden dann aber nicht persistiert! Das dynamische Hinzufügen von Attributen findet an der Objekt-Hülle, die in der Python-Laufzeit als Stellvertreter für das eigentliche Objekt den Attribut-Dispatch auf Einträge in den Spalten umleitet, statt. Die Objekthülle wird einschließlich der dynamisch hinzugefügten Attribute von der Speicherbereinigung entfernt, sobald das Python-Programm die Objekt-Referenz nicht mehr verwendet. Assoziationen zu Datenbank-Klassen und deren Multiplizität, d. h. ob es sich um eine einzige Referenz oder eine Vielzahl von Referenzen handelt, können explizit gemacht werden.

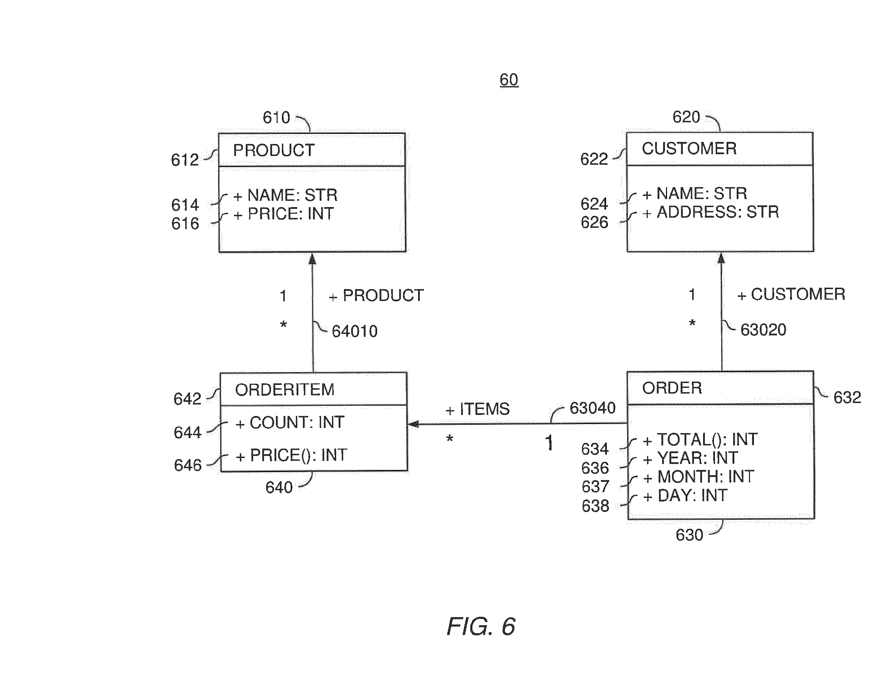

Figur 6 zeigt eine vereinfachte, beispielhafte Modelldatenbank 60 für ein sprachintegriertes Datenbanksystem gemäß einer bevorzugten Ausführungsform der Erfindung. Die Modelldatenbank 60 betifft ein System zur Verarbeitung von Prudukten, Kunden und Bestellungen und umfasst eine Produkt-Tablle 610, eine Kunden-Tabelle 620, eine Bestellung-Tabelle 630 und eine Bestellungsposten-Tabelle 640. Die Produkt-Tabelle 610 umfasst einen Tabellenkopf (Produkt, Product) 612, ein Datenfeld 614 für Name (name) des Produkts, das als Zeichenkette (string, str) ausgebildet ist, und ein Datenfeld 616 für Preis (price) des Produkts, das als Ganzzahl (integer, int) ausgebildet ist. Die Kunden-Tabelle 620 umfasst einen Tabellenkopf (Kunde, Customer) 622, ein Datenfeld 624 für Name (name) des Kunden und ein Datenfeld 626 für Adresse (address) des Kunden, die jeweils als Zeichenketten ausgebildet sind. Die Bestellung-Tabelle 630 umfasst einen Tabellenkopf (Bestellung, Order) 632, ein Datenfeld 634 für Summe (total) der Bestellung, die als Ganzzahl ausgebildet ist, und Datenfelder 636, 637, 638 für Jahr (year), Monat (month) und Tag (day) der Bestellung, die jeweils als Ganzzahl ausgebildet sind. Die Bestellungsposten-Tabelle 640 umfasst einen Tabellenkopf (Bestellungsposten, Orderltem) 622, ein Datenfeld 644 für Anzahl (count) der Produkte des Kunden und ein Datenfeld 646 für Preis (price) des Bestellungspostens, die jeweils als Ganzzahl ausgebildet sind. Die Modelldatenbank 60 umfasst weiterhin eine Kunden-Referenz (customer) 63020, eine Posten-Referenz (items) 63040 und eine Produkt-Referenz (product) 64010 zwischen den Tabellen 610, 620, 630 und 640. Die Kunden-Referenz 63020 von der Bestellung-Tabelle 630 zu der Kunden-Tabelle 620 ist eine Viele-zu-Eins (Many-To-One) Referenz, sodass mehrere Bestellungen auf einen Kunden verweisen können. Die Posten-Referenz 63040 von der Bestellung-Tabelle 630 zu der Bestellungsposten-Tabelle 640 ist eine Eins-zu-Viele (One-To-Many) Referenz, sodass eine Bestellung auf mehrere Bestellungsposten verweisen kann. Die Produkt-Referenz 64010 von der Bestellungsposten-Tabelle 640 zu der Produkt-Tabelle 610 ist Viele-zu-Eins Referenz, sodass viele Bestellungsposten auf ein Produkt verweisen können. Somit kann eine Bestellung einen Kunden und eine Anzahl, beispielsweise 0, 1, 2, 3 oder mehr, von Bestellposten umfassen, wobei jeder Bestellposten eine Anzahl, beispielsweise 0, 1, 2, 3 oder mehr, eines Produkts umfassen kann. Weiterhin kann ein Kunde eine Anzahl, beispielsweise 0, 1, 2, 3 oder mehr, Bestellungen haben. Weiterhin kann ein Produkt in einer Anzahl, beispielsweise 0, 1, 2, 3 oder mehr, von Bestellungsposten auftreten.

Beispiel für einen Pseudo-Quelltext, der die in Figur 6 gezeigte Modelldatenbank 60 in einem sprachintegrierten Datenbanksystem gemäß einer bevorzugten Ausführungsform der Erfindung mit Datenbank-Klassen implementiert:
1
2 @column_layout # Kennzeichnung der DB-Klassen
3 class Product(object):
4 name = str # Statische Typisierung
5 price = int
6
7 # normaler Konstruktor
8 def _init_(self, name, price):
9 self.name = name
10 self.price = price
11
12 @column_layout
13 class Customer(object):
14 name = str
15 address = str
16
17 @column_layout
18 class OrderItem(object):
19 count = int
20 product = One(Product) # Referenz auf genau ein Objekt
21
22 # Methoden funktionieren wie an normalen Klassen
23 def price(self):
24 return self.product.price * self.count
25
26 @column_layout
27 class Order(object):
28 items = Many(OrderItem) # Menge von Referenzen
29 customer = One(Customer)
30
31 year = int
32 month = int
33 day = int
34
35 def total(self):
36 sum = 0
37
38 # Mengen sind lesbar
39 for item in self.items:
40 sum += item.price()
41 return sum
42
43 def add_item(product, count = 1):
44
45 # Einfügen in die DB geschieht durch Instantiierung
46 item = OrderItem()
47 item.product = product
48 item.count = count
49
50 # Mengen sind modifizierbar
51 self.items_add(item)

Die Kennzeichnung der DB-Klassen kann, wie gezeigt, durch einen Klassen-Dekorator (class decorator) "column_layout" erfolgen. Im Wesentlichen kann der Klassen-Dekorator eine Methode sein, die zum Definitionszeitpunkt einer Klasse diese Klasse als Argument erhält, die Klassenvariablen, wie im Folgenden beschrieben, interpretiert und zu Gettern (Abfragern) und Settern (Einrichtern) für die Speicherorganisation gemäß der Erfindung umwandelt. Damit der Klassen-Dekorator die Getter und Setter dynamisch überschreiben kann, muss die Kennzeichnung, in der vorliegenden Implementierung, explizit von dem Objekt ("object") geerbt werden.

Attribute können durch Klassen-Variablen deklariert werden, deren Name der Attributname ist und deren Wert einem Typ entspricht, den das Attribut annehmen kann. Die vorliegende Implementierung kann die Python-Typen "int" (Ganzzahl, integer), "bool" (logisch, Boolean), "float" (Fließkommazahl, floating point number) und "str" (Zeichenkette, string) untersützen, wobei spezielle Typen, beispielsweise "One" (Eins-zu-Eins, One-To-One), "Many" (Eins-zu-Viele, One-To-Many) und "ManyToMany" (Viele-zu-Viele), Referenzen auf andere DB-Klassen angeben können. Der Platzhalter "Self" (Selbst) steht für die Klasse, in der der Platzhalter verwendet wird, da Python den Namen einer Klasse zum Zeitpunkt der Deklaration ihrer Klassen-Variablen noch nicht kennt.

Für eine Assoziation zu einer Instanz bezeichnet "referenzname = One(referenzierte_Klasse)" eine Referenz auf genau ein Objekt der angegebenen Klasse. Dieses Objekt kann durch "instanz.referenzname" gelesen und "instanz.referenzname = ziel" geschrieben werden. Die Multiplizität der deklarierenden Klasse ist beliebig, die Multiplizität der referenzierten Klasse ist eins.

Für eine exklusive Mengenassoziation bezeichnet "referenzname = Many(referenzierte_Klasse)" eine Menge von Referenzen auf Objekte, wobei jedes Ziel-Objekt maximal einmal (exklusiv) referenziert werden kann, d. h. die von allen Instanzen der Klasse referenzierten Mengen sind paarweise disjunkt. Dieses Verhalten kann gewünscht sein, beispielsweise können, wie in Figur 6 gezeigt, Kunden mehrere Bestellungen aufgeben, jede Bestellung aber nur zu einem Kunden gehören. Dabei kann "instanz.referenzname" die Menge der Referenzen zurückgeben. Die Methoden "referenzname_add" und "referenzname_remove" können durch den Klassen-Dekorator automatisch generiert werden. Die Methode "referenzname_add" kann ein Objekt zu der Menge hinzufügen. Die Methode "referenzname_remove" kann ein Objekt aus der Menge entfernen.

Eine Möglichkeit, die eindeutige Rückbeziehung auf Seite der referenzierten Klasse "parent" (Eltern) zu nennen bietet "children = Many(Person, through='parent')" (Kind). Um zu dem Objekt "a.children" ein Objekt "b" hinzufügen, kann "b.parent = a" oder, mit dem gleichen Effekt, "a.children add(b)" verwendet werden. Wenn kein "through"-Parameter angegeben wird, ein generierter Name verwendet werden.

Eine Many-Assoziation als solche kann die Einschränkung haben, dass assoziierte Objekte von nur einer Instanz gleichzeitig referenziert werden können. Damit auch die Rückbeziehung eine Menge darstellen kann und damit eine referenzierte Instanz zu mehreren referenzierenden Instanzen gehören kann, kann eine ManyToMany-Assoziation verwendet werden. Die ManyToMany-Assoziation kann mittels des "through"-Parameters auf der referenzierten Seite benannt werden. Die ManyToMany-Assoziation kann beidseitig eine Schnittstelle zum Ermitteln der Menge mittels "instanz.referenzname" und/oder eine Methode "instanz.referenzname_add" zum Hinzufügen einer Referenz sowie eine Methode "instanz.referenzname_remove" zum Entfernen einer Referenz anlegen.

Gemäß der vorliegender Erfindung werden die Vorteile einer Datenbank, beispielsweise einer Hauptspeicherdatenbank, für Objekte ohne Indirektion über SQL-Anfragen nutzbar gemacht. Dazu wird der Zustand eines Objekts auf eine Weise wie bei der Datenbank, beispielsweise der Hauptspeicherdatenbank, abgelegt, d. h. die Speicherorganisation für die Objekte, oder zumindest einige Attribute einiger Objekte, ist einer (Hauptspeicher-)Datenbank nachempfunden. Dazu können die Zustände der Objekts nebeneiander bzw. hintereinander im Speicher abgelegt werden, d. h. die Speicherung der Attribute der Objekte, oder zumindest einige Attribute einiger Objekte, kann der Spalten-orientierten Speicherung einer (Hauptspeicher-)Datenbank nachempfunden sein. Dazu wird in der vorliegenden Implementierung die Speicherorganisation der Objekte in Python geändert.

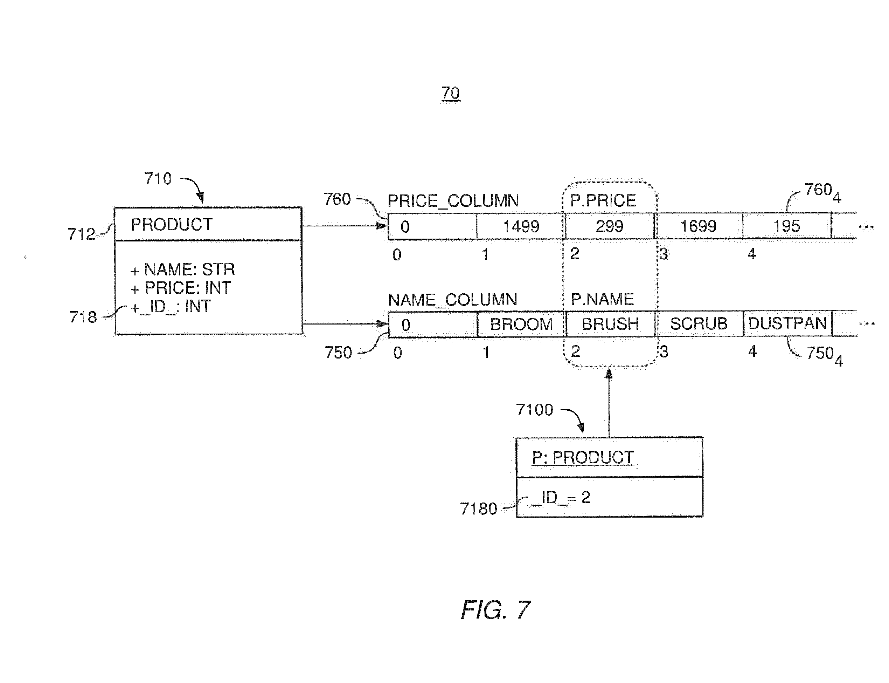

Figur 7 zeigt eine vereinfachte, beispielhafte Datenbank-Klasse für ein sprachintegriertes Datenbanksystem 70 gemäß einer bevorzugten Ausführungsform der Erfindung.

Das Datenbanksystem 70 umfasst eine Datenbank-Klasse 710 für Produkte, eine Name-Tabelle, wie Name-Spalte 750 mit einer Anzahl n von Einträgen 750₀ bis 750ₙ₋₁, eine Preis-Tabelle, wie Preis-Spalte 760 mit einer Anzahl n von Einträgen 760₀ bis 760ₙ₋₁, und eine Instanz 7100 der Datenbank-Klasse 710. Die Name-Spalte 750 und die Preis-Spalte 760 dienen jeweils zum Speichern von Attributen von Instanzen der Datenbank-Klasse 710. Attribute einer Klasse können eine gemeinsame Tabelle erhalten. Dabei kann, wie in Figur 6 gezeigt, jedes Attribut einer Klasse eine eigene Spalte erhalten. Die Datenbank-Klasse 710 umfasst eine Identifikation (ID) 718, die als Ganzzahl ausgebildet ist, sodass die Instanz 7100 eine Identifikation 7180, beispielsweise mit dem Wert 2, umfasst, die als Referenz auf die entsprechenden Einträge der Name-Spalte 750 und der Preis-Spalte 760, beispielsweise 750₂ und 760₂. Somit können die Attribute in Spalten organisiert werden. Weiterhin können Instanzen als Referenzen ausgebildet werden, die einen Zugriff auf ihre Attribute auf einen entsprechenden Eintrag in der Name-Spalte 750 und der Preis-Spalte 760 umleiten. Somit kennt eine Klasse alle ihre Attribut-Spalten und kann aus Datenbanksicht die Rolle einer Tabelle einnehmen. Die Instanzen der Klasse verfügen jeweils über eine Identifikation, mit der sie die zu ihnen gehörenden Attributwerte in der dazugehörigen Attribut-Spalte auffinden können.

Eine eindeutige Kombination aus der Klasse und der Identifikation als Primärschlüssel kann die Objektidentität darstellen.

Im Gegensatz zu einer Zeiger-basierten Implementierung der Referenzen ist die Identifikation abstrakt, d. h. nicht mit einer Speicherstelle fest verknüpft, sodass die Referenzen unabhängig von der Speicherorganisation sein können. Allerdings kann eine Übersetzung der Identifikation zu der eigentlichen Speicherstelle Zeit benötigen. Dafür kann die Übersetzung auch weitere Faktoren, beispielsweise Kompression oder Versionierung eines Objekts, berücksichtigen.

In der vorliegenden Implementierung sind die Instanzen der Datenbank-Klassen Referenzen, die jeweils den Typ der Datenbank-Klasse haben und als einziges Attribut die Identifikation speichern. Die übrigen Attribute werden automatisch durch Getter und Setter repräsentiert, die die Einträge der Spalten an der Position der ID lesen oder schreiben.

Ein expliziter Aufruf von "Klasse(...)" kann, wie in Python üblich, eine neue Instanz einer Klasse erzeugen, d. h. in allen Spalten wird eine neue Position reserviert. Dabei kann ein Referenzobjekt zurückgegeben werden, dessen Identifikation auf die neu reservierte Position verweist. Dies kann durch Überschreiben der "_new_"-Fabrikmethode einer Klasse erreicht werden, in der ein Threadsicherer Zähler inkrementiert und als Identifikation verwendet werden kann. Dazu eine weitere Fabrikmethode bereit gestellt werden, die unter Angabe einer bekannten Identifikation eine Referenz auf das Datenbank-Objekt erzeugt. Diese Methode kann "at" heißen, sodass ein Aufruf von "Klasse.at(i)" eine Referenz auf das Objekt mit der Identifikation i zurückgeben kann. Diese Methode bei einer Implementierung von Assoziationen besonders relevant sein.

Die Werte von Attributen, beispielsweise primitiven Attributen wie den oben genannten Python-Typen, können in einer Spalte hintereinander angeordnet sein. Da die Attribute den gleichen Typen haben, kann die Spalte als eine Array-Struktur, die einen Index-basierten Zugriff auf ihre Elemente erlaubt, ausgebildet werden. Eine Programmiersprache wie Python kann die Möglichkeit bieten, den Zugriff auf Attribute, beispielsweise mittels Properties (Eigenschaften), manuell zu implementieren bzw. überschreiben (Property-Dispatch, Eigenschaften-Ausführung).

Beispiel für einen Pseudo-Quelltext, der primitive Attribute auf den Spalten gemäß einer bevorzugten Ausführungsform der Erfindung mittels eines Property-Dispatch implementiert:
1
2 # Methode zur Generierung einer Attribut-Umleitung auf Spalten
3
4 def property_for(self, column):
5
6 def getter(self):
7 return column[seif._id_]
8
9 def setter(self, value):
10 column[self._id_] = value
11
12 return property(getter, setter)
13
14 # Erstellen eines Beispiel-Attributs
15
16 price_column = Column(int)
17 Product.price = property_for(price_column)

Zur Laufzeit können, wie gezeigt, neue Properties erstellt werden. Eine Methode "property_for" kann ein Spaltenobjekt entgegennehmen und einen "getter" und "setter" als innere Methoden definieren. Die Variable "column" von "getter" und "setter" kann bei Methodenausführung an die übergebene Spalte der äußeren Methode gebunden werden, d. h. zur Laufzeit können zwei neue Funktionen "getter" und "setter" erzeugt werden, die lediglich den für Instanzmethoden nötigen "self"-Parameter entgegen nehmen. Dies kann durch die Fähigkeit einer Programmiersprache wie Python ermöglicht werden, Funktionen bei ihrer Definition an Variablen eines umgebenden Namensraums zu binden und damit sogenannte "Closures" zu erzeugen.

Durch das "Property"-Konzept kann ermöglicht werden, Getter und Setter hinter einem Attributzugriff zu verbergen. Somit kann der Getter beim Lesen eines Attributs und der Setter beim Schreiben eines Attributs aufgerufen werden. Zugewiesen wird er der Klasse, wie die Zeilen 16 und 17 des vorstehenden Pseudo-Quelltexts beispielhaft zeigen.

Da die Klasse einer Assoziation im Voraus festgesetzt sein kann, kann für eine Eins-zu-Eins-(One-)Assoziation die Angabe der Identifikation des referenzierten Objekts reichen. Für eine One-Assoziation kann, ähnlich wie bei Fremdschlüsseln in einer Datenbank, eine Spalte als Ganzzahl-Array angelegt werden. Allerdings kann beim Lesen nicht die Zahl sondern eine Referenz vom Typ der Klasse zurückgegeben werden, die die Zahl als Identifikation umfasst. Das Schreiben einer Referenz kann dazu führen, dass die in der Referenz gespeicherte Identifikation, nach einer Typprüfung, in die entsprechende Spalte geschrieben wird.

Beispiel für einen Pseudo-Quelltext, der Assoziationen gemäß einer bevorzugten Ausführungsform der Erfindung mittels eines vereinfachten Property-Dispatch implementiert:
1 def association_for(column, target_class):
2
3 def getter(self):
4 return target_class.at(column[self._id_])
5
6 def setter(self, value):
7 column[self._id_] = value._id_
8
9 return property(getter, setter)

Für eine Assoziation können die verwendeten Getter und Setter, wie gezeigt, abgeändert werden. Während der Getter die Referenz mittels "at"-Fabrikmethode aus dem Spalteneintrag erzeugen kann, kann der Setter die Identifikation des Objekts in die Spalte schreiben. Die Typprüfung kann mittels Prüfung auf "is-instance(value, target_class)" erfolgen und ist der Vereinfachung nicht gezeigt.

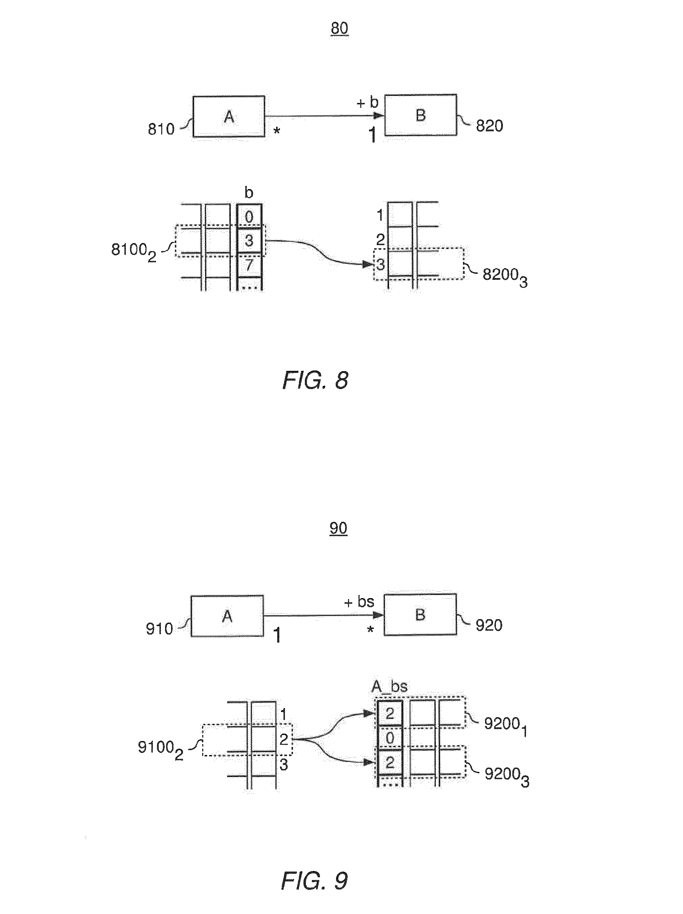

Figur 8 zeigt eine beispielshafte Darstellung der Eins-zu-Eins-(One-)Assoziation 80 für ein sprachintegriertes Datenbanksystem gemäß einer bevorzugten Ausführungsform der Erfindung. Dabei kann eine Klasse A 810 mittels eines Fremdschlüssels b auf eine Klasse B 820 verweisen. Beispielhaft umfasst eine (zweite) Instanz 8100₂ für den Fremdschlüssel b in einer Fremdschlüssel-Spalte einen Wert von 3, der eine (dritte) Instanz 8200₃ der Klasse B 820 referenziert.

Figur 9 zeigt eine beispielshafte Darstellung der Eins-zu-Viele-(Many-)Assoziation 90 für ein sprachintegriertes Datenbanksystem gemäß einer bevorzugten Ausführungsform der Erfindung. Dabei kann eine Klasse B 920 mittels eines Fremdschlüssels A_bs auf eine Klasse A 910 rückverweisen. Beispielhaft umfassen eine (erste) Instanz 9200₁ und eine (dritte) Instanz 9200₃ für den Fremdschlüssel A_bs in einer Fremdschlüssel-Spalte jeweils einen Wert von 2, der eine (zweite) Instanz 9100₂ der Klasse A 910 (rück-)referenziert, d. h. die Instanz 9100₂ der Klasse A 910 mit der Identifikation 2 referenziert die zwei Instanzen 9200₁ und 9200₃ der Klasse B 920.

Bei der Many-Assoziation existiert also ebenfalls eine Fremdschlüssel-Spalte, die jedoch der referenzierten Klasse zugeordnet ist. Zu der Menge der referenzierten Objekte gehören alle Objekte, die die Identifikation des referenzierenden Objekts als Fremdschlüssel beinhalten. Demnach kann beim Hinzufügen eines referenzierten Objekts dessen Fremdschlüssel auf den des referenzierenden Objekts gesetzt werden. Weiterhin kann beim Entfernen eines referenzierten Objekts dessen Fremdschlüssel auf null gesetzt werden. Da die Many-Assoziation im Wesentlichen als eine umgekehrte Betrachtung der One-Assoziation angesehen und implementiert werden kann, kann die Rückbeziehung mittels "through="-Parameters benannt werden. Ohne eine explizite Benennung kann sie den Namen "a_of_K" erhalten, wobei "a" der Assoziationsname ist und "K" der Name der Klasse, an der die Assoziation definiert worden ist, ist. Ohne die explizite Benennung kann die Rückbeziehung, wie in Figur 9 gezeigt, automatisch als bs_of_A bereit gestellt werden. Somit kann in der vorliegenden Implementierung auf der Seite der referenzierenden Klasse ein Getter erstellt werden, der die Menge zurückgibt. Weiterhin kann eine Methode "attributname_add" erstellt werden, die ein neues Objekt hinzufügt. Weiterhin kann eine Methode "attributname_remove" erstellt werden, die ein Objekt entfernt. In der vorliegenden Implementierung, die einen Prototypen darstellt, ist der Getter mittels linearer Suche, die ein asymptotisches Laufzeitverhalten von O(n) aufweist, implementiert worden. Der Getter kann mittels einer Indexstruktur implementiert werden. Dadurch erhält ein Nachschlagen (Suche, lookup) eine logarithmische Komplexität. Für das Nachschlagen der Identifikation in der Indexstruktur kann ein modifizierter Baum (Präfixbaum, Trie), wie nachstehend beschrieben, verwendet werden. Hinzufügen und Entfernen kann durch Setzen des Fremdschlüssels der referenzierten Instanz auf die eigene Identifikation oder null erfolgen. Null kann in Assoziationen als Null-Referenz gehandhabt werden.

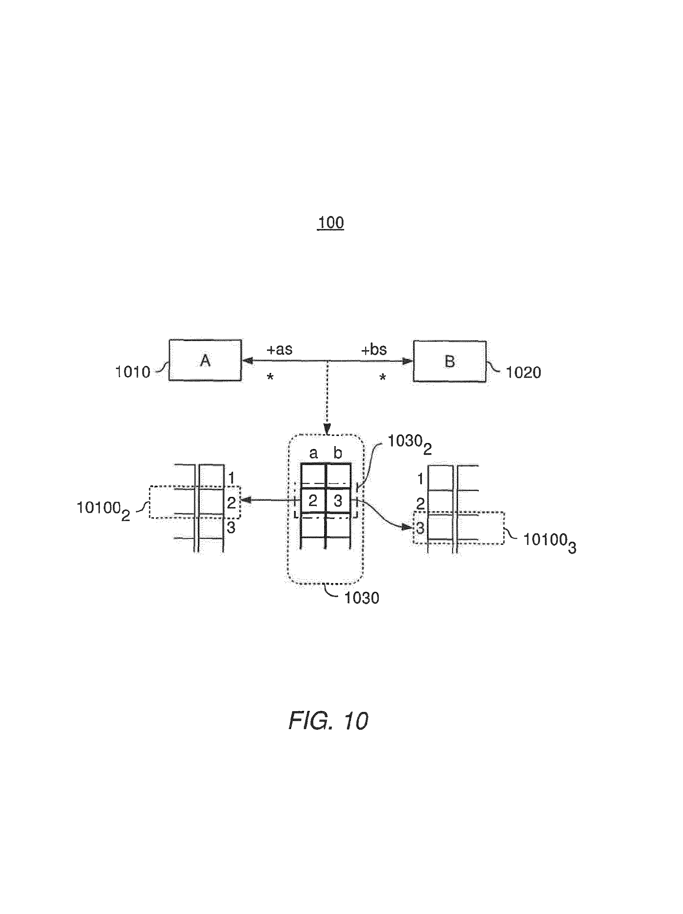

Figur 10 zeigt eine beispielshafte Darstellung der Viele-zu-Viele-(Many-To-Many-)Assoziation 100 für ein sprachintegriertes Datenbanksystem gemäß einer bevorzugten Ausführungsform der Erfindung. Dabei können eine Klasse A 1010 und eine Klasse B 1020 mittels einer Relations-Tabelle 1030 mit zwei Fremdschlüsseln a und b aufeinander verweisen. Beispielhaft umfasst die Relations-Tabelle 1030 ein Wertepaar 1030₂, wobei dessen Fremdschlüssel a eine (zweite) Instanz 10100₂ referenziert und dessen Fremdschlüssel b eine (dritte) Instanz 10200₃ referenziert, d. h. die Instanz 10100₂ der Klasse A 1010 mit der Identifikation 2 und die Instanzen 10200₃ der Klasse B 920 mit der Identifikation 3 bilden eine Relation.

Bislang konnte, wie in Figur 8 bzw. Figur 9 gezeigt, entweder auf der referenzierenden Seite oder auf der referenzierten Seite nur ein Fremdschlüssel eingetragen werden. Für beliebige Multiplizitäten auf beiden Seiten kann, wie in Figur 10 gezeigt, eine Zwischentabelle ausgebildet werden, die Paare zusammengehöriger Identifikationen speichert. Dabei können beide Seiten, wie bereits beschrieben, ein Getter erstellt werden, der die Menge der referenzierten Instanzen, beispielsweise mittels linearer Suche, ermittelt. Weiterhin kann ein Methode "attributname_add" erstellt werden. Weiterhin kann eine Methode "attributname_remove" erstellt werden. Auf beiden Seiten kann die Rückbeziehung mittels "through="-Parameters benannt werden, sodass die Attribute wie spezifiziert benannt werden.

Die Spalten zur Speicherung der Attribute können als wachsende Array (Feld) implementiert werden. Dabei kann ein häufiges Allokieren von Speicher, beispielsweise Reallozieren bei Erschöpfung des vorallozierten Speichers und /oder Kopieren von vorhandenen Einträgen bzw. Elementen des Arrays, einen quadratisch wachsenden Laufzeitaufwand verursachen. Aus diesem Grund sind Spalten in der vorliegenden Implementierung segmentiert.

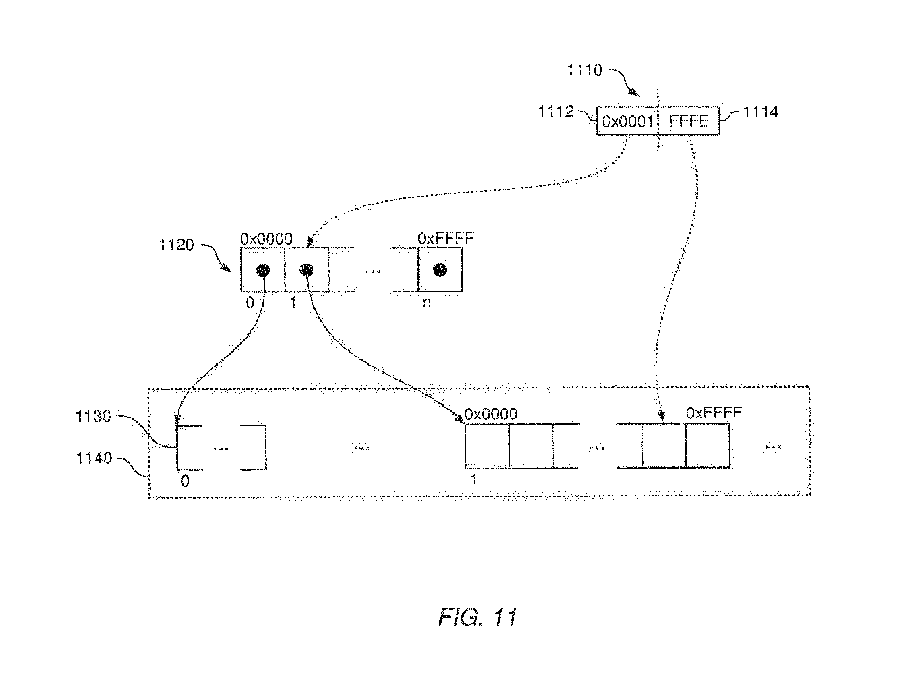

Figur 11 zeigt ein beispielhaftes Adressierungsschema für die Spalten eines sprachintegrierten Datenbanksystems gemäß einer bevorzugten Ausführungsform der Erfindung.

Das Adressierungsschema ist als Segment-Offset-Adressierung implementiert. Die Segment-Offset-Adressierung umfasst einen Index (Feld-Index, Array-Index) 1110, eine Segment-Tabelle (Segment-Table) 1120 und n Segmente 1130₀ bis 1130ₙ₋₁. Die Segmente 1130₀ bis 1130ₙ₋₁ umfassen Speicherstellen, beispielsweise physische Speicherstellen 0x0000 bis 0xFFFF. Die Segmente 1130₀ bis 1130ₙ₋₁ können über einen Speicherbereich 1140 verteilt sein. Die Segmente 1130₀ bis 1130ₙ₋₁ können in beliebiger Reihenfolge in dem Speicherbereich 1140 angeordnet sein. Der Speicherbereich 1140 kann einen freien Speicherbereich und/oder ein Segment einer anderen Segment-Offset-Adressierungen umfassen. Der Index 1110 bezeichnet eine Speicherstelle, beispielsweise - in hexadezimaler Schreibweise - 0x0001FFFE, und umfasst einen ersten (oberen) Teil 1112, der den höherwertigen Teil der Speicherstelle, im Beispiel 0x0001, beinhaltet, und einen (unteren) Teil, der den niederwertigen Teil der Speicherstelle, im Beispiel 0xFFFE, beinhaltet. Die Segment-Tabelle 1120 umfasst n Einträge 1120₀ bis 1120ₙ₋₁, von denen jeder auf ein zugeordnetes Segment 1130₀ bis 1130ₙ₋₁ verweist, sodass die Segment-Tabelle 1120 den ersten Teil 1112 der Speicherstelle, im Beispiel 0x0001, in das zugeordnete Segment, im Beispiel 1130₁ übersetzen kann und der zweite Teil 1114 die Speicherstelle in dem zugeordneten Segment, im Beispiel 0xFFFE, verweisen kann. Somit wird der Index in den oberen Teil und den unteren Teil aufgespalten, wobei der obere das Segment bestimmt, und der untere Teil den Offset innerhalb des Segments bestimmt.

Bei einer Segment-Offset-Adressierung kann der Zugriff auf eine Spalten-Position auf Bit-Ebene zunächst eine Aufspaltung in einen Segment-Teil und einen Offset-Teil erfordern, wobei die Bit-Längen eines jeden Teils konfigurierbar sein können. Mit dem Segment-Teil kann das Segment aus einer Segment-Tabelle gewählt werden, und mit dem Offset-Teil kann die Position innerhalb des Segments angegeben werden. Wenn über ein Segment hinaus geschrieben wird, kann ein nächstes Segment alloziert werden. Eine Segment-Tabelle kann den Segment-Teil in einen konkreten Segment-Zeiger übersetzen.

Segmente aus einem primitiven Typen, beispielsweise "int" wie 32-Bit-Ganzzahl, bool wie 8-Bit boolscher Wert oder float wie 64-Bit-Gleitkommazahl) können als Array aus dem Python-Modul "array" ausgebildet werden. Zeichenketten können als vorallozierte Python-Listen ausgebildet werden. Das ist für eine Implementierung in einer Produktivumgebung nicht optimal, aber für einen Prototypen ausreichend. In der Implementierung werden gleiche Zeichenketten durch Zeichenketteninternierung (String-Interning) der Programmiersprache, Python, nicht mehrfach gespeichert, sondern als entsprechende Zeiger.

In der vorliegenden Implementierung wird ein 32-Bit-Index verwendet, der in zwei 16-Bit-Hälften aufgespalten ist, sodass eine maximale Elementzahl auf 2³² = 4.294.967.296 begrenzt ist. Die Größe des Indexes bzw. die Anzahl und Größe der Segmente können anders und/oder variable ausgebildet werden. Zum Beispiel kann die Größe der Segmente und/oder Anzahl der Segmente, und damit auch die Größe der Segment-Tabelle, erhöht werden, um die maximale Elementzahl zu erhöhen.

Für eine lokale Optimierung kann jedes Segment für sich genommen, beispielsweise je nach Nutzungsfrequenz, komprimiert werden. Somit können Segmente mit Daten, die öfter verwendet werden, unkomprimiert bleiben, während Segmente mit Daten, die seltener verwendet werden, komprimiert bzw. ausgelagert werden. Dadurch kann der Speicherverbrauch reduziert werden, wobei allerdings die Zugriffszeit auf die komprimierten Segmente verlängert wird. Weiterhin kann die Kompression auf den Daten lokal arbeiten, d. h. die Kompression kann sich an lokale Schwankungen in der Datenverteilung anpassen.

Die vorliegende Implementierung verwendet eine einfache Heuristik: Wenn ein Segment gefüllt wird und damit ein nächste Segment alloziert wird, wird ein Segment, das dem gefüllten Segment vorausgeht, komprimiert. Somit bleiben mindestens die letzten 216 Einträge schnell verfügbar, während ältere Daten komprimiert sind. Eine verbesserte Heuristik kann auf tatsächlichen Daten der Laufzeit basieren.

Daten in Datenbanken können leere Felder und/oder Redundanzen, beispielsweise in Form von mehrfach gespeicherten Werten, umfassen. Durch Kompression kann die Größe der Daten und somit der Datenbank, reduziert werden. Da Hauptspeicher im Vergleich zu Festplattenspeicher teurer ist, kann eine Datenbank, insbesondere eine Hauptspeicherdatenbanken von einer verbesserten Ausnutzung des Hauptspeichers, beispielsweise durch Kompression, profitieren.

Die Daten innerhalb einer Spalte können stark korreliert sein. Wenn, zum Beispiel, nur wenige voneinander verschiedene Werte wie die Jahreszahlen von 2000 bis einschließlich 2012 verwendet werden, kann jedem eindeutigen Wert eine kürzest mögliche, unterscheidbare Bitfolge zugeordnet werden, die den Wert in einem Wörterbuch (Dictionary) bezeichnet. Diese (Bit-)Kompression benötigt für die Darstellung von n verschiedenen Werten nur log₂ n Bits pro Eintrag. Im Beispiel kann jede Jahreszahl von 2000 bis 2012 mit 4 Bits dargestellt werden. Während in der verwendeten Programmiersprache, Python, eine Ganzzahl 32 Bits belegt, würde eine komprimierte Jahreszahl, im Vergleich mit der Ganzzahl, nur ein Achtel an Speicher belegen.

Aufgrund ihrer Einfachheit kann diese Kompression bei lesenden Zugriffen sehr schnell sein, da die Speicheradresse eines Spalteneintrags bei bekannter Bit-Länge jedes Eintrags einfach errechnet werden kann und nur mittels des Wörterbuchs eine Rückübersetzung der Zahl in den ursprünglichen Wert erforderlich ist.

Weiterhin können Spalten, die zu einem großen Teil leer sind, beispielsweise Namenszusätze in einer Personentabelle, mit einer Lauflängenkompression komprimiert werden. Weiterhin können Textdaten beispielsweise durch den LZW-Algorithmus komprimiert und, bei Bedarf, extrahieren werden. Daten, wie Textdaten, können in einer alternativen Darstellung, beispielsweise mit einem Patricia-Tree, Redundanz-ärmer bzw. Redundanz-frei aufbewahrt werden.

Solange jedes Objekt genau einmal in einer Datenbank gespeichert ist, ist seine Position innerhalb der Spalten eindeutig. Somit könnte die Identifikation des Objekts semantisch der absoluten Position seiner Attribut-Werte in den jeweiligen Spalten entsprechen. Wenn Objekte mehrfach in der Datenbank gespeichert werden, führt dieser Ansatz allerdings zu einem Problem.

Beispielsweise können Objekte mehrfach in der Datenbank gespeichert werden, wenn für eine Nebenläufigkeits- und Transaktionssteuerung eine Multiversionsnebenläufigkeitssteuerung (Multiversion Concurrency Control, MCC) und/oder für eine Darstellung vergangener Datenbank-Zustände eine Zeitreise-Abfrage (Time-Travel Query) verwendet wird. Dabei kann jede Modifikation eines Objekts eine neue Version des Objekts, beispielsweise an einer aufsteigenden Spalten-Position, erzeugen. Um die Identität erhalten zu können, muss die konstante Identifikation auf die sich ändernde, aktuelle Spaltenposition übersetzt werden.

Für eine solche Schlüssel-Wert-Zuordnung kann eine Reihe von Datenstrukturen verwendet werden.

Beispielsweise kann in einer Hauptspeicherdatenbank ein CSB+-Baum (CSB+-tree) verwendet werden, der sich im Wesentlichen wie ein B+-Baum (B+-tree) verhält, jedoch anstellt von Zeigern (Pointers) auf jeden einzelnen Kindknoten (Child-node) nur einen Zeiger auf ein Array von Kindknoten enthält. Dadurch kann der Speicherverbrauch durch die Zeiger reduziert und die Ausnutzung des CPU-Caches verbessert werden.

In der vorliegenden Implementierung wird für das Nachschlagen der Identifikation ein modifizierter Baum (Präfixbaum, Trie) verwendet, der ursprünglich für Zeichenketten optimiert wurde. Der Trie ist also ein spezieller Baum (tree), nämlich ein Präfixbaum.

Der Präfixbaum hat, im Vergleich zu einem B+-Baum oder CSB+-Baum, eine einfachere Implementierung und die (vorteilhaften) Eigenschaften, dass keine Duplikation der Daten in den Knoten erfolgt und ein Kindknoten anstelle von Suchen durch eine direkte Berechnung ermittelt wird. Weiterhin kann der Präfixbaum, im Vergleich zum B+-Baum, relativ einfach für nebenläufige Zugriffe erweitert werden.

Der Trie zerlegt einen Schlüssel in kleinere Einheiten und arbeitet ihn von vorne nach hinten ab. Die vorliegende Implementierung verwendet einen 256-ären Trie, wobei es sich bei den Einheiten um Bytes, die Werte 0 bis 255 annehmen können, handelt. Das höchstwertige Byte ist der Index des ersten Kindknotens, dort wird an der Position des zweithöchsten Bytes der nächste Kindknoten ausgewählt, usw. bis das niederwertigste Byte des Schlüssels schließlich im Blattknoten einen konkreten Wert ausliest.

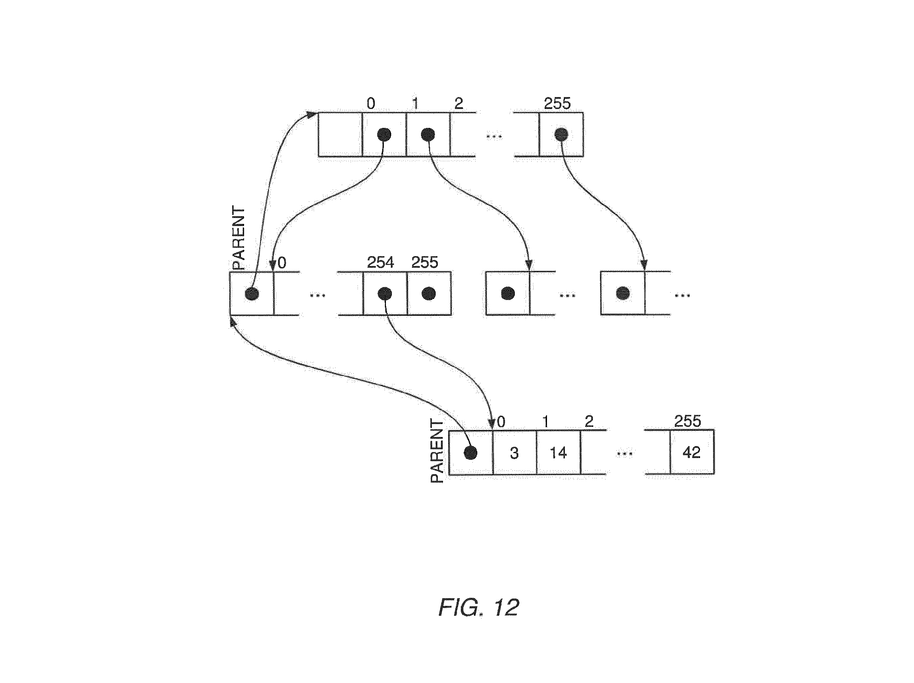

Figur 12 zeigt einen 256-ären Trie mit drei Ebenen und Rückreferenzen auf Elternknoten.

Zum Nachschlagen kann der Schlüssel als dreistellige Zahl zur Basis 256 dargestellt und ein dreifaches Feld-Nachschlagen (Array-Lookup) durchgeführt werden. Wenn beispielsweise der Schlüssel 65025 nachgeschlagen werden soll, wird er als dreistellige Zahl zur Basis 256 dargestellt: 65025 = (0; 254; 1)₂₅₆. Beginnend von der Wurzel werden rekursiv der 0-te Eintrag, dann der 254-te Eintrag und schließlich der 1-ten Eintrag nachgeschlagen. Während die ersten beiden inneren Knoten wiederum auf einen Knoten verweisen, ist im Blattknoten an Position 1 die Zahl 14, die die Speicherposition des gesuchten Elements mit Identifikation 1 bezeichnet, direkt ablesbar.

Hat ein Trie-Knoten n Ebenen Abstand zu den Blättern, wobei für ein Blatt n = 0 gilt, errechnet sich der zu auszuwählende Kindknoten aus i_{child} = key/(256ⁿ) mod 256. Ein Trie mit der Tiefe t hat somit einen Definitionsbereich von 0 bis einschließlich 256^{t}-1 und kann zu jedem Schlüssel genau einen Wert speichern.

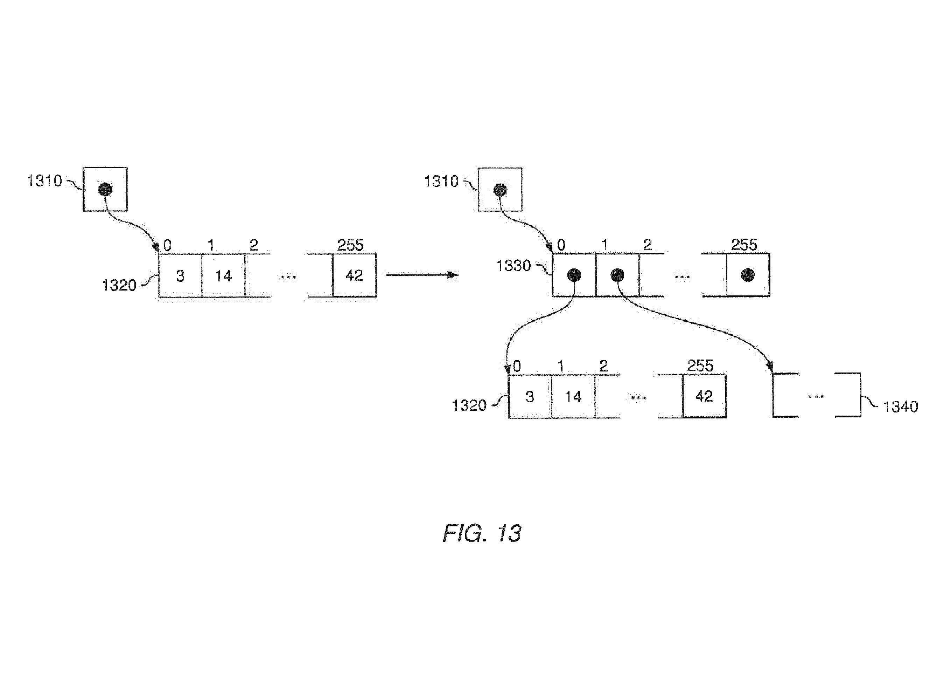

Figur 13 zeigt eine Transformation eines 256-ären Tries mit einer Ebene in einen 256-ären Trie mit zwei Ebenen. Die Transformation ist abbildungserhaltend. Zunächst verweist eine Referenz 1310 auf den Wurzel- und Blattknoten 1320. Durch die Transformation bleibt der Blattknoten 1320 unverändert und wird zum nullten Element eines neuen Wurzelknotens 1330, der nun 256-mal so viele Schlüssel adressieren kann. Ein Schreiben von Schlüssel 256 kann nun einen neuen Blattknoten 1340 allozieren und dort an nullter Position den Wert speichern.

Da, beispielsweise aufgrund des Schreibens in den Trie, die Menge der Primärschlüssel nicht von vornherein bekannt ist, muss der Trie auf eine Überschreitung des Definitionsbereichs reagieren können. Zunächst kann der Trie einen einzigen Blattknoten 1320 umfassen, sodass der Trie ein 256-elementiges Array ist. Wenn ein Wert hinter einem Schlüssel größer als 255 geschrieben werden soll, kann ein neuer Wurzelknoten 1330, dessen 0-tes Element der bisherige Blattknoten 1320 wird, erstellt werden. Diese Transformation verändert die gespeicherte Abbildung nicht. Der Trie kann nun Werte bis 256²-1 = 65535 speichern. Wenn ein Kindknoten, beispielsweise Blattknoten 1340, noch nicht existiert, kann er alloziert und eine Referenz dorthin gesetzt werden.

Für ein transaktionales Lesen aus der und/oder Schreiben in die Datenbank kann eine Versionierung des Tries erforderlich werden. Wenn eine Indexstruktur einer Transaktion, d. h. mehreren zusammenhängenden Änderungen, die möglicherweise vollständig oder aber auch gar nicht ausgeführt werden, unterzogen wird, kann, und sollte, mit einer Kopie der Indexstruktur gearbeitet. Aufgrund der Größe der Indexstruktur kann es, beispielsweise bezüglich Speicherbedarf und/oder Zeitaufwand, unpraktikabel sein, mit einer vollständigen Kopie der Indexstruktur zu arbeiten. Die vorliegende Implementierung erzeugt eine flache Kopie des Wurzelknotens.

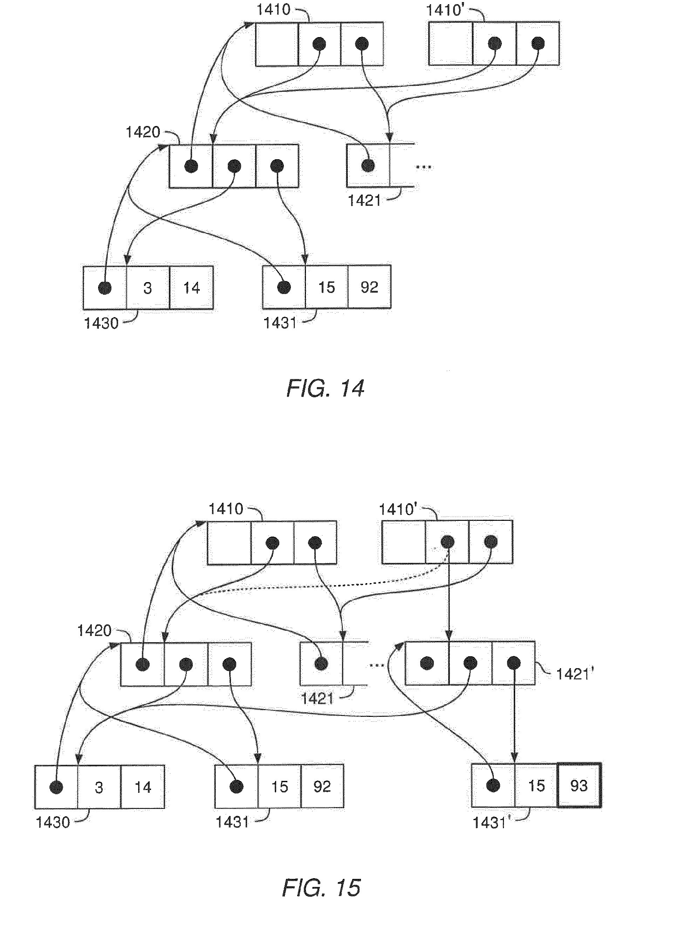

Figur 14 zeigt ein Anlegen einer flachen Kopie eines Tries mit drei Ebenen. Zunächst umfasst der Trie auf der ersten Ebene einen ersten Wurzelknoten 1410 einer ursprünglichen Version (Version 0), auf der zweiten Ebene zwei Kindknoten 1420 und 1421 der Version 0 und auf der dritten Ebene zwei Blattknoten 1430 und 1431 der Version 0. Der erste Wurzelknoten 1410 und die Kindknoten 1420 und 1421 umfassen jeweils Verweise auf ihre Kindknoten 1420 und 1421 bzw. 1430 und 1431. Die Kindknoten 1420 und 1421 umfassen jeweils Verweise auf ihre Elternknoten 1410 bzw. 1420 und 1421 (Eltern-Referenzen). Durch das Anlegen der flachen Kopie umfasst der Trie weiterhin einen zweiten Wurzelknoten 1410', als Kopie der ersten Wurzelknotens 1410, als Version 1. Der zweite Wurzelknoten 1410' umfasst, wie der erste Wurzelknoten 1410, Verweise auf seine Kindknoten 1420 und 1421. Bis ein Wert geschrieben wird, zeigen alle Referenzen auf die Kindknoten des ursprünglichen Tries.

Figur 15 zeigt ein Verändern eines Blattknotens des in Figur 14 gezeigten Tries.

Bei einem Schreibvorgang wird der betroffene Blattknoten 1431, wie in Figur 15 gezeigt, dupliziert und nur der duplizierte Blattknoten 1431' an der betroffen Stelle verändert ("92" → "93"). Da auch die Referenz auf den duplizierten Blattknoten 1431' in seinem Elternknoten 1420 verändert werden muss, wird auch er dupliziert und verändert. Somit propagiert der Kopiervorgang nach oben bis zu einem Knoten, der bereits kopiert wurde, im Beispiel der zweite Wurzelknoten 1421'. Die Veränderung des Blattknoten 1431' bewirkt also einen nach oben propagierenden Copy-On-Write-Prozess. Weiterhin wird beim Kopieren eines Knotens eine Eltern-Referenz auf den ebenfalls kopierten Elternknoten gesetzt. Somit kann jederzeit festgestellt bzw. entschieden werden, ob ein KindKnoten mit einem älteren Trie geteilt wird (die Eltern-Referenz zeigt dann auf eine vorhergegangene Version) und kopiert werden muss, oder bereits kopiert wurde.

Wenn keine Nebenläufigkeit vorliegt, können zur Übernahme ein Einsetzen des neuen Tries anstelle des alten Tries erfolgen oder zum Abbrechen ein Deallozieren der kopierten Knoten erfolgen. Wenn nebenläufige Änderungen vorliegen können, kann vor der Übernahme verifiziert werden, ob die nichtkopierten Knoten geändert wurden und diese ggf. aus der neuesten Version übernommen werden müssen. Da jeder Trie das Ergebnis einer vollständigen Transaktion widerspiegelt, kann ein Merge-Konflikt durch Überschreiben mit der neuesten Änderung konsistent gelöst werden. Zur Linearisierung der Änderungshistorie kann in der vorliegenden Implementierung ein Three-Way Merge ausgeführt werden. Die Linearisierung kann beispielsweise an den Befehl "git rebase" des Versionskontrollsystems GIT angelehnt werden.

In dem Prototyp ist die Zeitkomplexität zum Auffinden einzelner Werte in einer Spalte linear. Das Auffinden einzelner Werte kann durch Einführung von Indizes beschleunigt werden. Dabei erscheint die vorliegende Implementierung des Tries für Indizes weniger geeignet, da sie Schlüssel-Duplikation und von Ganzzahlen verschieden Schlüsseltypen nicht unterstützt. Die Indizes können mittels eines B+ oder CSB+ Baums implementiert. Die Indizes können, beispielsweise auf Fremdschlüssel-Spalten wie Fremdschlüssel-Spalten von Many- und ManyToMany-Assoziationen, automatisch erstellt werden.

Programmiersprachen wie Objekte-orientierte Programmiersprachen können beispielsweise in ein ausführbares Programm oder einen Zwischencode übersetzt bzw. kompiliert werden oder, wenn es sich um Skriptsprachen handelt, zur Laufzeit interpretiert werden.

Die vorliegende Implementierung dient als Prototyp und ist in einer Skriptsprache, Python, erfolgt. Die vorliegende Implementierung kann weiterhin den Python-Interpreter PyPy, der beispielsweise Just-In-Time-(JIT-)Kompilierung bietet, verwenden.

Ein Laufzeitvergleich bei Durchführung realistischer Szenarien anhand der in Figur 6 gezeigten Modelldatenbank hat für CPython 2.7.3 allein und mit PyPy 1.9 das Folgende ergeben:
1. OLTP Lesen: 100.000mal Lesen der Kundenadresse des einer beliebigen Bestellung zugeordneten Kunden. Pseudo-Quellcode:
   result = Order.at(i).customer.address.
   CPython 2.7.3: 0,87 Sekunden (s)
   PyPy 1.9: 0,79 s
2. OLTP Einfügen: Instantiieren von 100 Produkten, 1.000 Kunden, 10.000 Bestellungen und 100.000 Posten mit Zufallswerten.
   CPython 2.7.3: 6,28 s
   PyPy 1.9: 2,53 s
3. OLTP Ändern: 100.000mal Modifizieren eines Attributs. Pseudo-Quellcode:
   OrderDetail.at(i).count = 1
   CPython 2.7.3: 3,38 s
   PyPy 1.9: 0,77 s
4. OLAP: Analytische Anfrage, die den Gesamtumsatz aller verkauften Produkte gruppiert nach Produkt und Jahr ermittelt.
   CPython 2.7.3: 1,68 s
   PyPy 1.9: 0,22 s

Somit ist PyPy in typischen Datenbank-Szenarien schneller als CPython. Als Ergebnis des Laufzeitvergleichs ergibt sich also ein Performanzvorteil von PyPy gegenüber CPython.

Die Implementierung einer Datenbank in einer Skriptsprache kann daher in Hinblick auf Performanz und Speichereffizienz verbessert werden. Beispielsweise kann eine Implementierung in einer Systemprogrammiersprache wie C oder C++ erfolgen. Allerdings kann PyPy die Geschwindigkeit äquivalenter C-Programme in Einzelfällen sogar überbieten.

Im Folgenden wird ein weiterer Vergleich der Implementierung als Datenbank in Python, Datenbank mit Kompression in Python, Objekte in Python und Datenbank in SQLite beschrieben.

Der Vergleich der implementierten Datenbank-Objekte mit den herkömmlichen Objekten in der Python-Laufzeit und den Tupeln in SQLite ergibt, dass die Spalten-orientierte Speicherung bereits in der wenig optimierten Implementierung des Prototypen kompakter ist. Dabei kann der Prototyp neben den beschriebenen Vorgängen zur Unterstützung von Transaktions- und Nebenläufigkeitskontrolle weitere (transaktionale) Lese- und Schreibvorgänge ausführen, sodass die Ausführung des Prototyps aufwändiger als nötig sein kann.

Als Hardware wird wiederum eine Intel Core i7-2720QM CPU mit 4 x 3,30 GHz, Hyper-Threading und 16 GB DDR3-RAM verwendet. Als Interpreter wird eine vorkompilierte 32-Bit-Version PyPy 1.9.1 JIT mit SQLite 3 auf Windows 7 64-Bit verwendet. Dabei ist die Auslagerungsdatei deaktiviert, sodass die Tests ausschließlich im RAM stattgefunden haben.

Weder in der vorliegenden Implementierung noch in SQLite werden Indizes, die Operationen in bestimmten Fällen beeinflussen (beschleunigen oder bremsen) könnten, explizit angelegt.

Lediglich PrimärSchlüssel und Fremdschlüssel sind definiert. SQLite ist durch die folgenden beiden Optionen auf Hauptspeicherbetrieb optimiert worden: "PRAGMA synchronous = OFF", um eine asynchrone Verarbeitung zu aktivieren, und "temp_store = 2, um sämtliche Caches ausschließlich in den Hauptspeicher zu verlagern.

Der Vergleich hat das Folgende ergeben:

Für einen Vergleich des Speicherverbrauchs wird die Anzahl von Entitäten gemessen, die jeweils gespeichert werden können, bevor ein "MemoryError" (Speicherfehler) von Python erzeugt wird (in einer 32-Bit-Version ist der Speicherfehler aufgetreten, wenn 2 GB RAM aufgebraucht worden sind).

Ein erster Test arbeitet mit kleinen Entitäten, die lediglich eine Ganzzahl zwischen 0 und 10 sowie eine Referenz auf eine andere Entität gleichen Typs speichern.

Pseudo-Quelltext für die Beispielklasse des ersten Tests (kleine Entität):
1 @column_layout
2 class Vertex(object):
3 drain = One(Self)
4 weight = int

Gemessene Anzahl erzeugbarer kleiner Objekte (zwei Attribute) in 2 GB Hauptspeicher:
Datenbank in Python: 33.600.000
Datenbank mit Kompression in Python: 35.200.000
Objekte in Python: 29.400.000
Datenbank in SQLite: 102.000.000
Ein zweiter Test arbeitet mit Objekte mit 10 ganzzahligen Attributen, deren Wertebereich jeweils 10 Elemente umfasst.

Die Spalten-basierte Speicherorganisation ermöglicht gegenüber normalen Python-Objekten eine höhere Packungsdichte der Daten im Speicher.

Gemessene Anzahl erzeugbarer großer Objekte (zehn Attribute) in 2 GB Hauptspeicher:
Datenbank in Python: 19.900.000
Datenbank mit Kompression in Python: 32.800.000
Objekte in Python: 8.000.000
Datenbank in SQLite: 28.400.000

Hier wiegt der Einfluss der Metadaten deutlich weniger, sodass sich die Kapazität der neuen Speicherorganisation gegenüber normalen (nativen) Python-Objekten bereits ohne Kompression um Faktor 2,4 erhöht. Mit Kompression kann sogar die Tupel-basierte Speicherung von SQLite übertroffen werden.

Der Aufwand (Overhead) durch Verwaltungs-Datenstrukturen hält sich gegenüber der Wörterbuch-basierten Speicherung normaler Python-Objekte die Waage. Eine Kompression nutzt nur wenig, da Metadaten und Fremdschlüssel nicht effektiv komprimiert werden. SQLite, das keine Kompression benutzt, kann die kleinen Tupel noch wesentlich effizienter Ablegen.

Insgesamt ist die Spalten-orientierte Speicherung bezüglich Speichereffizienz deutlich besser als normale Python-Objekte und kann bei größer werdenden Entitäten mit nicht-komprimierenden Datenbanken wie SQLite mithalten.

Für einen Vergleich der Performanz werden eine Vielzahl von Einfüge-, Schreib-und Lesevorgängen pro Sekunde ausgeführt.

Ein erster Test fügt in die in Figur 6 gezeigte Modelldatenbank 60 10.000.000 Posten ("OrderDetail") mit zufälliger Anzahl und zufälligem Produkt, 1.000.000 Bestellungen mit je 10 Posten, 100.000 Kunden mit je 10 Bestellungen und 10.000 Produkten ein. Danach sind insgesamt 11.110.000 Objekte angelegt.

Anzahl von erzeugten Elementen pro Sekunde:
Datenbank in Python: 667.000 Objekte
Datenbank in SQLite: 1.250.000 Tupel

Pro Sekunde kann SQLite knapp doppelt so viele Tupel in eine Datenbank eintragen als die sprachintegrierte Datenbank Objekte erzeugen kann.

Während SQLite mittels SQL-Insert-Statement 1.250.000 Elemente pro Sekunde anlegen kann, erzeugt die sprachintegrierte Datenbank 667.000 Instanzen. Bei der normlen Erzeugung von Instanzen wird jeweils auch ein Referenzobjekt miterzeugt, das allerdings wieder verworfen wird. Eine Funktion zur Mehrfacherzeugung (Bulk-Insert) von Objekten kann die die Performanz der sprachintegrierte Datenbank erhöhen.

Ein zweiter Test führt eine einfache Anfrage, die Objekt-orientiert prägnant ausdrückbar ist, aus. Die Anfrage ermittelt, in der in Figur 6 gezeigten Modelldatenbank 60, die Kundenadresse zu einer Bestellung, beispielsweise mittels "order.customer.address". Die Anfrage umfasst in SQLite eine komplexere relationale Anfrage mit Join-Bedingungen.

Pseudo-Quelltext (Implementierung) für den zweiten Test (einfache Anfrage):
1 def address(order_id):
2 customer = Order.at(order_id).customer
3 return customer.name, customer.address

Pseudo-Quelltext (SQL-Statement) für den zweiten Test (einfache Anfrage):
SELECT customers.name, customers.address
FROM customers, orders
WHERE orders.id = %s
AND orders.customer_id = customers.id

Anzahl von Objekt-orientierten Anfragen pro Sekunde:
Datenbank in Python: 48.000 Anfragen
Datenbank in SQLite: 2.400 Anfragen

Da das Folgen von Assoziationen in SQLite einen Join erfordert, ist SQLite um den Faktor 20 langsamer als die sprachintegrierte Datenbank, so dass die Performanz gegenüber Python einbricht.

Somit ist die Implementierung der sprachintegrierte Datenbank der Assoziationsauflösung des relationalen Modells bei einfachen Objekt-orientierten Zugriffen überlegen.

Ein dritter Test führt eine verschachtelte Anfrage zur Ermittlung des Umsatzes von 100 verschiedenen Kunden aus. Im Wesentlichen werden, in der in Figur 6 gezeigten Modelldatenbank 60, zu einem beliebigen Kunden die Werte aller seiner Bestellungen ermittelt, wobei der Wert einer Bestellung die Summe aller Bestellungsposten umfasst. Der Wert eines Bestellungspostens umfasst das Produkt aus Produktpreis Bestellmenge.

Pseudo-Quelltext (Implementierung) für den dritten Test (verschachtelte Anfrage):
1 class Order:
2 # ...
3 def total(self):
4 "'Berechnet den Gesamtwert dieser Bestellung"'
5 return sum(
6 ((d.product.price * d.count for d in self.details)
7 )
8 # Anfrage
9 def customer_revenue(customer_id)
10 return sum(
11 ((o.total() for o in Customer.at(customer_id).orders)
12 )

Pseudo-Quelltext (SQL-Statement) für den dritten Test (verschachtelte Anfrage):
SELECT SUM(order_details.count * products.price)
FROM order_details, orders, products
WHERE order_details.order_id = orders.id
AND order_details.product_id = products.id
AND orders.customer_id = ?

Anzahl von aggregierenden Anfragen pro Sekunde:
Datenbank in Python: 6,7 Anfragen
Datenbank in SQLite: 14,1 Anfragen

Wenn Anfragen Mengenoperationen beinhalten, hat das relationale Modell einen konzeptuellen Vorteil.

Da die Mengen in dem Prototyp mit linearer Zeitkomplexität gesucht werden, macht die Verwendung einer Menge ("self.details") sowie mehrerer Summen die Anfrage ohne Optimierung kompliziert. Die Mengenoperationen mittels linearer Suche, beispielsweise das Abrufen aller Posten einer Bestellung, ergeben bei verschachtelten Anfragen, beispielsweise über alle Bestellungen eines Kunden, ein quadratisches Laufzeitverhalten. SQL kann dies durch eine Join-Operation Mengen-basiert mit günstigerem Laufzeitverhalten lösen. Die Objekt-orientiert formulierte Anfrage ist gegenüber dem relationalen Modell im Nachteil. Der Prototyp ohne Optimierungen erreicht 47 % gegenüber SQLite.

Ein vierter Test führt eine Aktualisierung (Update) eines Attributes aus. Die Mengenangabe eines Bestellungspostens wird auf eins (1) gesetzt. Das Update wird für 1.000.000 verschiedene Bestellungsposten ausgeführt.

Pseudo-Quelltext (SQL-Statement) für den vierten Test (Aktualisierung):
.1 def update(detail_id):
2 OrderDetail.at(detail_id).count = 1

Pseudo-Quelltext (SQL-Statement) für den vierten Test (Aktualisierung):
UPDATE order_details
SET count = 1
WHERE id = ?

Anzahl von Attribute-Updates pro Sekunde:
Datenbank in Python: 1.240.000 Updates
Datenbank in SQLite: 200.000 Updates

Updates sind im Prototyp der sprachintegrierten Datenbank gegenüber SQLite deutlich schneller.

Die direkte Übersetzung der Attribut-Zuweisung im Prototyp der sprachintegrierten Datenbank ist, trotz Einsatzes von MVCC in diesem Test, um den Faktor 6,2 schneller als SQLite.

Das Ergebnis, dass eine in der Skriptsprache Python als Prototyp implementierte Datenbank in Verbindung mit einem modernen JIT-Compiler in einigen Szenarien sowohl Performanz- als auch Speichervorteile gegenüber einer etablierten Datenbank bietet, bestätigt das Potential der sprachintegrierten Datenbank gemäß der vorliegenden Erfindung.

Die Aufhebung (Eliminierung) der Trennung in Schichten wirkt sich besonders bei einfachen Vorgängen aus, beispielsweise bei kleinen Änderungen auf einzelnen Objekten oder dem Folgen von Assoziationen, wie sie in Objekt-orientierten Programmiersprachen allgegenwärtig sind. Bei Aggregaten oder Mengenoperationen ist der Prototyp der sprachintegrierten Datenbank (noch) im Nachteil, allerdings ist die Speicherorganisation von SQLite auf solche Operationen auch besonders ausgelegt.

Somit ermöglicht die vorliegende Erfindung ein Objekt-orientiertes Programmieren auf Daten ohne Umwege, beispielsweise über Objekt-relationale Mapper, SQL und Prozessgrenzen. Die vorliegende Erfindung integriert eine Datenbank, beispielsweise eine Hauptspeicherdatenbank, in die Laufzeitumgebung einer Objekt-orientierten Programmiersprache, beispielsweise Python.

## Patentansprüche

1. Computer-basierte Vorrichtung (20) für eine sprachintegrierte Datenbank (30, 70), umfassend:
- eine Speichereinrichtung (214) zum Speichern eines ersten Objekts (7100) mit einem Attribut (750₂) und eines zweiten Objekts mit einem korrespondierenden Attribut (750₀, 750₁, 750₃, 750₄), die das Attribut (750₂) und das korrespondierende Attribut (750₀, 750₁, 750₃, 750₄) in einer Einheit (750) benachbart speichert, und
- eine Verarbeitungseinrichtung (212), die auf das Attribut (750₂) und das korrespondierende Attribut (750₀, 750₁, 750₃, 750₄) zusammen zugreifen kann.

2. Computer-basierte Vorrichtung (20) nach Anspruch 1, wobei:
- die Einheit (750) als Tabelle, beispielsweise Zeilen-orientierte Tabelle oder Spalten-orientierte Tabelle wie einspaltige Tabelle, ausgebildet ist.

3. Computer-basierte Vorrichtung (20) nach Anspruch 1 oder 2, wobei:
- die Speichereinrichtung (214) als Hauptspeicher ausgebildet, und /oder
- die Speichereinrichtung (214) als flüchtiger Speicher, beispielsweise Schreib-Lese-Speicher, oder nicht-flüchtiger Speicher, beispielsweise Flash-Speicher, ausgebildet ist.

4. Computer-basierte Vorrichtung (20) nach einem der Ansprüche 1-3, wobei:
- das erste Objekt (7100) eine erste Instanz einer Klasse (710) ist, und
- das zweite Objekt eine zweite Instanz der Klasse (710) ist.

5. Computer-basierte Vorrichtung (20) nach Anspruch 4, wobei:
- eine Methode der Klasse (710), beispielsweise mittels eines Klassen-Dekorators, so angepasst ist, dass sie auf das Attribut (750₂) und/oder das korrespondierende Attribut (750₀, 750₁, 750₃, 750₄), beispielsweise zum Lesen und/oder Schreiben des Attributs (750₂) und/oder des korrespondierenden Attributs (750₀, 750₁, 750₃, 750₄), in der Einheit (750) zugreifen kann.

6. Computer-basierte Vorrichtung (20) nach einem der Ansprüche 1-5, weiterhin umfassend:
- eine Laufzeiteinrichtung zum Bereitstellen einer Laufzeitumgebung.

7. Computer-implementiertes Verfahren für eine sprachintegrierte Datenbank (30, 70), umfassend:
- Speichern eines ersten Objekts (7100) mit einem Attribut (750₂) und eines zweiten Objekts mit einem korrespondierenden Attribut (750₀, 750₁, 750₃, 750₄) mittels einer Speichereinrichtung (214), die das Attribut (750₂) und das korrespondierende Attribut (750₀, 750₁, 750₃, 750₄) in einer Einheit (750) benachbart speichert, und
- Zugreifen auf das Attribut (750₂) und das korrespondierende Attribut (750₀, 750₁, 750₃, 750₄) zusammen mittels einer Verarbeitungseinrichtung (212).

8. Computer-implementiertes Verfahren nach Anspruch 7, weiterhin umfassend:
- Ausbilden der Einheit (750) als Tabelle, beispielsweise Zeilen-orientierte Tabelle oder Spalten-orientierte Tabelle wie einspaltige Tabelle.

9. Computer-implementiertes Verfahren nach Anspruch 7 oder 8, weiterhin umfassend:
- Ausbilden der Speichereinrichtung (214) als Hauptspeicher, und /oder
- Ausbilden der Speichereinrichtung (214) als flüchtigen Speicher, beispielsweise Schreib-Lese-Speicher, oder nicht-flüchtigen Speicher, beispielsweise Flash-Speicher.

10. Computer-implementiertes Verfahren nach einem der Ansprüche 7-9, wobei:
- das erste Objekt (7100) eine erste Instanz einer Klasse (710) ist, und
- das zweite Objekt eine zweite Instanz der Klasse (710) ist.

11. Computer-implementiertes Verfahren nach Anspruch 10, weiterhin umfassend:
- Anpassen einer Methode der Klasse (710), beispielsweise mittels eines Klassen-Dekorators, so dass sie auf das Attribut (750₂) und/oder das korrespondierende Attribut (750₀, 750₁, 750₃, 750₄), beispielsweise zum Lesen und/oder Schreiben des Attributs (750₂) und/oder des korrespondierenden Attributs (750₀, 750₁, 750₃, 750₄), in der Einheit (750) zugreifen kann.

12. Computer-implementiertes Verfahren nach einem der Ansprüche 7-11, weiterhin umfassend:
- Bereitstellen einer Laufzeitumgebung mittels einer Laufzeiteinrichtung.

13. Computer-implementiertes System für eine sprachintegrierte Datenbank, umfassend:
- eine Computer-basierte Vorrichtung (20) nach einem der Ansprüche 1-6, wobei
- eine transaktionale Anfrage und eine analytische Anfrage in einer Hochsprache implementiert werden können.

14. Computerprogrammprodukt, wobei das Computerprogrammprodukt ein Computerprogramm umfasst, das auf einem Datenträger (220) oder in einem Speicher (214, 216) eines Computers (20) gespeichert ist und das von dem Computer (20) lesbare Befehle umfasst, die zur Ausführung des Verfahrens nach einem der vorstehenden Verfahrensansprüche bestimmt sind, wenn die Befehle auf dem Computer (20) ausgeführt werden.
